# EUROPÄISCHE PATENTANMELDUNG

(11) **EP 2 204 431 A1**
(43) Veröffentlichungstag der Anmeldung: **07.07.2010**
(21) Anmeldenummer: 08172049.2
(22) Anmeldetag: 18.12.2008
(51) Int. Cl.: C09K 8/508, C09K 8/512, C09K 8/516

(54) **Verfahren zur Blockierung unterirdischer Formationen**

(71) Anmelder: BASF SE, 67056 Ludwigshafen (DE)
(72) Erfinder: Die Erfindernennung liegt noch nicht vor

(57) **Zusammenfassung**

Vorgeschlagen wird ein Verfahren zur Blockierung unterirdischer Formationen bei der Förderung von fossilem Öl und/oder Gas, wobei bei einem ersten Schritt in flüssigkeitsführende und poröse Gesteinsformationen wasserabsorbierende Partikel eingebracht werden, bei denen es sich um wasserquellbare, vernetzte und wasserunlösliche Polymere handelt und wobei schließlich die Partikel in der wasserführenden Gesteinsformation durch Wasserabsorption den Flüssigkeitsfluss durch die Gesteinsschichten unterbinden. Gekennzeichnet ist dieses Verfahren dadurch, dass es sich bei absorbierenden Partikeln um ein superabsorbierendes Polymer mit anionischen und/oder kationischen Eigenschaften und einer zeitlich verzögerten Quellungswirkung handelt. Dieses Verfahren, welches auch in salzhaltigen Formationswässern durchgeführt werden kann, zeichnet sich dadurch aus, dass die Quellung der eingesetzten Superabsorber frühestens nach fünf Minuten beginnt und dass die Superabsorber durch vier vorgeschlagene Verfahrensvarianten und deren beliebige Kombinationen zugänglich sind. Dieses Verfahren, welches ohne Trägerflüssigkeit auskommt, zeichnet sich durch seine Einfachheit und insbesondere die steuerbare Verzögerung der Quellungswirkung unter den spezifischen Bedingungen unterirdischer Gesteinsformationen aus.

## Beschreibung

Gegenstand der vorliegenden Erfindung ist ein Verfahren zur Blockierung unterirdischer Formationen bei der Förderung von fossilem Öl und/oder Gas.

Bei der Produktion bzw. Förderung von flüssigen oder auch gasförmigen Kohlenwasserstoffen aus unterirdischen Formationen können wegen der stark schwankenden Porositäten der unterirdischen Gesteinsformationen und insbesondere beim Vorliegen von zerklüfteten Gesteinformationen, die als "fractured reservoirs" bezeichnet werden, Probleme auftreten.

Häufig werden im Zuge sogenannter sekundärer oder tertiärer Ölförderungsmaßnahmen Wasser, Wasserdampf oder wässrige Polymerlösungen in die Formation gepumpt, um so die Kohlenwasserstoffe aus den Formationen und den darin enthaltenen Klüften herauszudrücken. Unterschiede in den Porositäten der Formation führen bei diesen Maßnahmen dazu, dass das jeweilige Flutmedium bevorzugt die permeablen Kanäle durchfließt, so dass Zonen mit geringerer Porosität nur unvollständig oder nicht geflutet werden. Im Ergebnis werden dann ausschließlich diejenigen Kohlenwasserstoffe zugänglich und förderbar, welche sich in den permeableren Gesteinsbereichen befinden.

Um dies zu verhindern, wird deshalb versucht, die permeableren Kanäle selektiv zu verstopfen, wofür zum Beispiel wasserquellbare Polymerpartikel, die auch als Superabsorber oder superabsorbierende Polymere (SAP) bezeichnet werden, eingesetzt werden (vgl. US 4,182,417).

Superabsorbierende Polymere stellen vernetzte, hochmolekulare, entweder anionische oder kationische Polyelektrolyte dar, welche durch radikalische Polymerisation geeigneter, ethylenisch ungesättigter Vinylverbindungen und anschließende Trocknungsmaßnahmen der erhaltenen Copolymere erhältlich sind. Bei Kontakt mit Wasser oder wässrigen Systemen bildet sich unter Quellen und Wasseraufnahme ein Hydrogel aus, wobei ein Vielfaches des Gewichts des pulverförmigen Copolymers aufgenommen werden kann. Unter Hydrogelen versteht man Wasser enthaltende Gele auf der Basis hydrophiler, aber vernetzter wasserunlöslicher Polymere, die als dreidimensionale Netzwerke vorliegen.

Bei superabsorbierenden Polymeren handelt es sich also in der Regel um vernetzte Polyelektrolyte, z.B. bestehend aus teilneutralisierter Polyacrylsäure. Sie werden im Buch "Modern Superabsorbent Polymer Technology" (F.L. Buchholz und A.T. Grahem, Wiley-VCH, 1998) ausführlich beschrieben. Daneben gibt es in der neueren Patentliteratur eine Vielzahl von Patenten, die sich mit superabsorbierenden Polymeren befassen.

### Exemplarisch sei an dieser Stelle auf die folgenden Patentdokumente verwiesen:

US 5,837,789 beschreibt ein vernetztes Polymer, welches zur Absorption von wässrigen Flüssigkeiten eingesetzt wird. Dieses Polymer ist aufgebaut aus teilweise neutralisierten Monomeren mit monoethylenisch ungesättigten Säuregruppen und ggf. weiteren Monomeren, die mit den ersten Baugruppen copolymerisiert sind. Beschrieben ist außerdem ein Verfahren zur Herstellung dieser Polymere, wobei zunächst die jeweiligen Ausgangskomponenten zu einem Hydrogel mit Hilfe einer Lösungs- oder Suspensionspolymerisation polymerisiert werden. Das so erhaltene Polymer kann an seiner Oberfläche anschließend vernetzt werden, was vorzugsweise bei erhöhten Temperaturen erfolgen sollte.

Gelpartikel mit superabsorbierenden Eigenschaften, die aus mehreren Komponenten zusammengesetzt sind, beschreibt US 6,603,056 B2. Die Gelpartikel umfassen mindestens ein Harz, welches in der Lage ist, saure, wässrige Lösungen zu absorbieren und mindestens ein Harz, welches basische, wässrige Lösungen aufnehmen kann. Jedes Partikel enthält außerdem mindestens eine Mikrodomäne des sauren Harzes, welche im unmittelbaren Kontakt zu einer Mikrodomäne des basischen Harzes steht. Das so erhaltene superabsorbierende Polymer zeichnet sich durch eine definierte Leitfähigkeit in Salzlösungen aus, und außerdem durch eine definierte Aufnahmekapazität unter Druckbedingungen.

Im Mittelpunkt von EP 1 393 757 B1 stehen absorbierende Kerne für Windeln mit verringerter Dicke. Die absorbierenden Kerne zum Erfassen von Körperflüssigkeiten enthalten Partikel, die in der Lage sind, superabsorbierende Kerne zu bilden. Die Partikel sind unter anderem mit einer Oberflächenvernetzung versehen, um den Partikeln eine individuelle Stabilität zu verleihen, so dass sich eine definierte Salzfluss-Konduktivität ergibt. Die genannte Oberflächenschicht ist im Wesentlichen nicht kovalent an die Partikel gebunden und sie enthält ein teilweise hydrolisierbares, kationisches Polymer, welches im Bereich von 40 bis 80% hydrolysiert ist. Diese Schicht muss auf den Partikeln in einer Menge von weniger als 10 Gew.-% aufgebracht sein. Vorzugsweise handelt es sich bei dem teilweise hydrolisierten Polymer um eine Variante auf Basis von N-Vinyl-Alkyl-Amid oder N-Vinyl-Alkyl-Imid und insbesondere von N-Vinylformamid.

Superabsorbierende Hydrogele, die mit vernetzten Polyaminen beschichtet sind, sind auch in der internationalen Patentanmeldung WO 03/0436701 A1 beschrieben. Die Umhüllung umfasst dabei kationische Polymere, welche durch eine Additionsreaktion vernetzt worden sind. Das so erhältliche Hydrogel-bildende Polymer weist einen Restwassergehalt von weniger als 10 Gew.-% auf.

Ein mit Polykationen oberflächenbehandeltes wasserabsorbierendes Polymergebilde ist in der deutschen Offenlegungsschrift DE 10 2005 018 922 A1 beschrieben. Dieses Polymergebilde, das außerdem mit mindestens einem Anion in Kontakt gebracht worden ist, weist eine Absorption unter einem Druck von 50 g/m² von mindestens 16 g/g auf.

Superabsorbierende Polymere, die mit einem Polyamin beschichtet sind, sind Gegenstand der WO 2006/082188 A1. Derartige superabsorbierende Polymerpartikel basieren auf einem Polymer mit einem pH-Wert > 6. Die in diesem Zusammenhang auch beschriebenen Hygieneartikel zeigen eine schnelle Aufnahmerate gegenüber Körperflüssigkeiten.

Superabsorbierende Polymerpartikel, die mit Polyaminen beschichtet sind, sind auch der WO 2006/082189 A1 zu entnehmen. Als typische Polyaminverbindung ist hier Polyammoniumcarbonat genannt. Auch in diesem Fall steht die rasche Aufnahme von Körperflüssigkeiten durch die Partikel im Vordergrund.

Ein typisches Herstellungsverfahren für Polymere und Copolymere von wasserlöslichen Monomeren und insbesondere von Acrylsäure und Methacrylsäure ist dem US-Patent 4,857,610 zu entnehmen. Wässrige Lösungen der jeweiligen Monomere, die polymerisierbare Doppelbindungen enthalten, werden bei Temperaturen zwischen -10 und 120°C einer Polymerisationsreaktion unterzogen, so dass sich eine Polymerschicht von mindestens einem Zentimeter Dicke ergibt. Auch diese so erhältlichen Polymere verfügen über schnelle superabsorbierende Eigenschaften.

Sowohl die bei Buchholz als auch die in späteren Patentanmeldungen beschriebenen superabsorbierenden Polymere sind so genannte "schnelle" Produkte, d.h. sie erreichen innerhalb weniger Minuten ihre volle Wasseraufnahmekapazität. Vor allem bei der Anwendung in Hygiene-Artikeln ist es notwendig, dass Flüssigkeiten möglichst schnell aufgenommen werden, um so ein Auslaufen aus dem Hygieneartikel zu verhindern.
Für die Anwendung zur selektiven Blockierung von unterirdischen Formationen bei der Förderung von Öl und/oder Gas bereitet dieses schnelle Quellen aber Probleme, da das SAP zunächst über weitere Entfernungen an seinen Wirkungsort, die unterirdische Formation eingebracht werden muss.

Dieses Problem wird in der internationalen Patentanmeldung WO96/02608 A1 dadurch gelöst, dass der beschriebene sulfonierte Superabsorber auf Basis von 2-Acryl-amido-2-methyl-propansulfonsäure (AMPS) in Kohlenwasserstoffen dispergiert wird. Durch diese Maßnahme wird sicher gestellt, dass der Superabsorber erst dann quillt, wenn er an seinem Einsatzort mit Wasser in Kontakt kommt.

Auch die US 2004/0168798 beschreibt die Anwendung von Superabsorbern im bereits angesprochenen Anwendungsgebiet. Gemäß dieser Veröffentlichung werden vernetzte Polyacrylamide als Superabsorber verwendet. Auch hier gelingt der Transport des Superabsorbers zum Einsatz in der Formation durch Verwendung eines nicht wässrigen Mediums als Trägerflüssigkeit. Auch eine CaCl₂-Lösung soll als Trägermedium geeignet sein. In Abhängigkeit von der Konzentration der Salzlösung kann das Quellen des Superabsorbers verzögert werden: Dies bedeutet, dass die vollständige Quellung eines Superabsorbers umso länger dauert, je höher die CaCl₂-Konzentration in der Trägerflüssigkeit ist. Nachteilig bei diesem vorgeschlagenen Verfahren ist allerdings, dass damit nur der Endpunkt der Quellung, nicht aber der Beginn der Quellung hinausgezögert wird.

Ein Lösungsansatz ist somit in jedem Fall in der Verwendung geeigneter Superabsorber zu sehen. Superabsorbierende Polymere mit zeitverzögerter Quellung sind in der noch unveröffentlichten Prioritätsanmeldung DE 10 2008 030 712.2 beschrieben.

Aus den zu Beginn geschilderten Unzulänglichkeiten im Zusammenhang mit der Förderung von Öl und/oder Gas hat sich für die vorliegende Erfindung die Aufgabe gestellt, ein neues Verfahren zur Blockierung unterirdischer Formationen bei der Förderung von fossilem Öl und/oder Gas bereitzustellen, wobei bei einem ersten Schritt in flüssigkeitsführende und poröse Gesteinsformationen wasserabsorbierende Partikel eingebracht werden, bei denen es sich um wasserquellbare, vernetzte und wasserunlösliche Polymere handelt und wobei schließlich Partikel in der wasserführenden Gesteinsformation durch Wasserabsorption den Flüssigkeitsfluss durch die Gesteinsschichten unterbinden. Das neue Verfahren soll möglichst einfach durchzuführen sein und ohne Trägerflüssigkeiten auskommen. Dabei muss gewährleistet sein, dass die permeablen Kanäle so selektiv verstopft werden, dass das gewählte Flutmedium sämtliche Gesteinsbereiche erreicht, aus denen die Kohlenwasserstoffe gefördert werden sollen.

Gelöst wurde diese Aufgabe mit Hilfe des erfindungsgemäßen Verfahrens, bei dem es sich bei den absorbierenden Partikeln um ein superabsorbierendes Polymer (SAP) mit anionischen und/oder kationischen Eigenschaften und einer zeitlich verzögerten Quellungswirkung handelt.

Überraschend hat sich herausgestellt, dass mit diesem Verfahren -welches bevorzugt ohne nicht-wässrige Trägerflüssigkeit auskommt - und vor allem dem Einsatz der speziellen absorbierenden Partikel nicht nur die Aufgabenstellung vollständig erfüllt werden konnte, sondern dass der bereits bekannte Rheologiesprung durch die Flüssigkeitsaufnahme in die erfindungsgemäß eingesetzten superabsorbierenden Polymere auch in unterirdischen Formationen erreicht wird. Dies war deshalb nicht vorhersehbar, da sich die fossilen Reservoirs in einer Umgebung befinden, die durch hohe Temperaturen und hohe Drücke gekennzeichnet sind. Hinzu kommt das Strömungsverhalten in den Spalten und Klüften der Gesteinsformationen, was einen erheblichen Unterschied zu den bauchemischen Einsatzgebieten ausmacht, in denen laut der unveröffentlichten Prioritätsanmeldung DE 10 2008 030 712.2 die beschriebenen superabsorbierenden Polymere bislang Verwendung fanden.

Als vorteilhaft hat sich herausgestellt, dass SAP besonders geeignet sind, die durch Polymerisation ethylenisch ungesättigter Vinylverbindungen hergestellt wurden.

Nicht zu erwarten war auch, dass die jeweiligen SAP im erfindungsgemäßen Verfahren in salzhaltigen Formationswässern eingesetzt werden können. Die vorliegende Erfindung beansprucht deshalb eine entsprechende Verfahrensvariante. Dies war umso erstaunlicher, da aus dem Stand der Technik bekannt ist, dass Salzlösungen das Quellen des Superabsorbers verzögern, weshalb im vorliegenden Fall zu erwarten war, dass beim Einsatz der SAP in salzhaltigen Formationswässern die gezielte Einstellung einer zeitlich verzögerten Quellung nicht möglich ist.

Von der vorliegenden Erfindung ist auch die Möglichkeit umfasst, dass die Quellung des SAP frühestens nach fünf Minuten beginnt und das superabsorbierende Polymer mit Hilfe von Verfahrensvarianten hergestellt wurde, welche aus vier Alternativen ausgewählt wird. Bei diesen Alternativen handelt es sich um a) Polymerisation der Monomer-Komponenten in Gegenwart einer Kombination bestehend aus mindestens einem hydrolysestabilen und mindestens einem hydrolyselabilen Vernetzer; b) Polymerisation von mindestens einem permanent anionischen Monomer und mindestens einem hydrolysierbaren kationischen Monomer; c) Beschichtung einer Kernpolymer-Komponente mit mindestens einem weiteren Polyelektrolyten als Hüllpolymer, d) Polymerisation von mindestens einem hydrolysestabilen Monomer mit mindestens einem hydrolyselabilen Monomer in Gegenwart mindestens eines Vernetzers. Die genannten Verfahrensvarianten a) bis d) können in beliebiger Zahl untereinander kombiniert werden.

Aufgrund des speziellen Einsatzbereiches sind vor allem solche Superabsorber vorteilhaft, die auch bei moderaten bis höheren Salzkonzentrationen, insbesondere hohen Calciumionenkonzentrationen, ein hohes Wasserabsorptionsvermögen aufweisen. Unter dem Ausdruck "verzögerte Quellungswirkung" soll erfindungsgemäß die Tatsche verstanden werden, dass beim SAP frühestens nach 5 Minuten die Quellung, also die Flüssigkeitsaufnahme beginnt. Zeitverzögert heißt dabei erfindungsgemäß, dass vor allem der überwiegende Teil der Quellung des superabsorbierenden Polymeren erst nach über 10 Minuten, bevorzugt nach mehr als 15 min und besonders bevorzugt erst nach mehr als 30 Minuten auftritt. Bereits länger bekannt ist im Zusammenhang mit Hygieneartikeln die Verzögerung im Bereich von wenigen Sekunden, damit sich bspw. die Flüssigkeit erst in der Windel verteilt, bevor sie aufgenommen wird, um die gesamte Menge an Superabsorber in der Windel ausnutzen zu können und mit weniger Vliesmaterial auszukommen. Im vorliegenden Fall der Erfindung werden aber unter Zeitverzögerung längere Zeiträume von mehr als 5 Minuten und insbesondere mehr als 10 Minuten verstanden.

Wie bereits diskutiert, kann die Bereitstellung der erfindungsgemäß verzögerten superabsorbierenden Polymeren vorzugsweise in vier Ausführungsformen erfolgen:
Polymerisation unter Beteiligung einer
   a) Kombination eines hydrolysestabilen und eines hydrolyselabilen Vernetzers; oder/und
   b) Polymerisation eines permanent anionisches Monomers und einem hydrolysierbaren kationischen Monomer; oder/und
   c) Beschichtung eines superabsorbierenden Polymers als Kern mit einem weiteren Polyelektrolyten als Hülle, wobei das Kernpolymer hydrolysestabile Vernetzer enthält; oder/und
   d) Polymerisation von mindestens einem hydrolysestabilen Monomer mit mindestens einem hydrolyselabilen Monomer in Gegenwart mindestens eines Vernetzers.

Jede der Ausführungsformen a), b, c)) oder d) kann allein für sich verwendet werden. Dies wird im Folgenden als "reine Ausführungsform" bezeichnet. Es ist aber auch möglich, die erfindungsgemäßen Ausführungsformen untereinander zu kombinieren. So kann ein Polymer nach Ausführungsform a) in einem zusätzlichen Verfahrensschritt nach Ausführungsform c) noch mit einem weiteren Polyelektrolyten beschichtet werden, um die Zeitverzögerung noch exakter einzustellen. Dies wird im Folgenden als "gemischte Ausführungsformen" bezeichnet. Allen Ausführungsformen, ob rein oder gemischt, ist dabei gemeinsam, dass die Eigenschaften des erhaltenen zeitverzögerten superabsorbierenden Polymeren dem Anforderungsprofil entsprechen. Bei jeder der Ausführungsformen kommt es beim Einbringen des erfindungsgemäßen zeitverzögerten superabsorbierenden Polymers z. B. in eine Baustoffmischung, zu einer chemischen Reaktion, die zu einer Steigerung der Absorption führt. Nach der Reaktion wird die maximale Absorption erreicht, die im folgenden Endabsorption genannt wird.

Nach den folgenden Varianten-übergreifenden Merkmalen werden zunächst die reinen Ausführungsformen beschrieben, bevor abschließend auf gemischte Ausführungsformen eingegangen wird.

Die erfindungsgemäßen SAP zeichnen sich insbesondere dadurch aus, dass die jeweiligen Monomerbausteine als freie Säuren, als Salz oder in einer Mischform daraus eingesetzt worden sind.

Unabhängig von der jeweils eingesetzten Verfahrensvariante zur Herstellung der SAP hat es sich als vorteilhaft herausgestellt, wenn die Säureanteile nach der Polymerisation neutralisiert worden sind. Dies erfolgt in vorteilhafter Weise mit Hilfe von Natrium-, Kalium-, Calcium- oder Magnesium-Hydroxid, von Natrium-, Kalium-, Calcium- oder Magnesium-Carbonat, Ammoniak, einem primären, sekundären oder tertiären C₁-₂₀-Alkylamin, einem C₁-₂₀-Alkanolamin, einem C₅₋₈-Cycloalkylamin und/oder einem C₆₋₁₄-Alkylamin, wobei die Amine verzweigte und/oder unverzweigte Alkylgruppen mit 1 bis 8 Kohlenstoffatomen aufweisen können. Geeignet sind natürlich auch sämtliche Mischungen.

In den Verfahrensvarianten a) und/oder b) sollte die Polymerisation gemäß vorliegender Erfindung insbesondere als radikalische Substanz, Lösungs-, Gel-, Emulsions-, Dispersions-oder Suspensions-Polymerisation durchgeführt worden sein. Als besonders geeignet hat sich die Gelpolymerisation erwiesen.

Empfehlenswert ist es auch, die Polymerisation unter adiabatischen Bedingungen durchzuführen, wobei dann die Reaktion vorzugsweise mit einem Redox-Starter und/oder einem Photoinitiator gestartet worden sein sollte.

Insgesamt ist für die Herstellung der superabsorbierenden Polymere gemäß vorliegender Erfindung die Temperatur unkritisch. Allerdings hat es sich nicht nur unter wirtschaftlichen Gesichtspunkten als günstig herausgestellt, wenn die Polymerisation bei Temperaturen zwischen -20 und +60°C gestartet worden ist. Bereiche zwischen -10 und +50°C, insbesondere zwischen 0 und 40°C und bevorzugt über 30°C haben sich als Starttemperaturen als besonders geeignet gezeigt. Auch hinsichtlich des Verfahrensdruckes unterliegt die vorliegende Erfindung keiner Einschränkung. Dies ist auch der Grund dafür, warum die Polymerisation idealerweise unter Atmosphärendruck und insgesamt ohne jegliche Wärmezufuhr durchgeführt werden kann, was von der vorliegenden Erfindung als vorteilhaft berücksichtigt wird.

Auch der Einsatz von nicht-wässrigen Lösemitteln ist im Wesentlichen für die Polymerisationsreaktion nicht erforderlich. Allerdings kann es sich in speziellen Fällen als günstig erweisen, wenn die Herstellung der superabsorbierenden Polymere in Gegenwart mindestens eines nicht mit Wasser mischbaren Lösemittels und insbesondere in Gegenwart eines organischen Lösemittels durchgeführt worden ist. Im Falle der organischen Lösemittel sollte dieses ausgewählt worden sein aus der Reihe der linearen, aliphatischen Kohlenwasserstoffe und vorzugsweise n-Pentan, n-Hexan und n-Heptan. Es kommen aber auch verzweigte aliphatische Kohlenwasserstoffe (Isoparaffine), cycloaliphatische Kohlenwasserstoffe und vorzugsweise Cyclohexan und Decalin, oder aromatische Kohlenwasserstoffe, und hier insbesondere Benzol, Toluol und Xylol, aber auch Alkohole, Ketone, Carbonsäureester, Nitroverbindungen, halogenhaltige Kohlenwasserstoffe, Ether, oder jegliche geeignete Mischungen daraus in Frage. Organische Lösemittel, die mit Wasser azeotrope Gemische bilden, sind besonders gut geeignet.

Wie bereits dargelegt, basieren die superabsorbierenden Polymere gemäß vorliegender Erfindung auf ethylenisch ungesättigten Vinylverbindungen. In diesem Zusammenhang sieht die vorliegende Erfindung vor, diese Verbindungen auszuwählen aus der Reihe der ethylenisch ungesättigten, wasserlöslichen Carboxylsäuren und ethylenisch ungesättigten Sulfonsäuremonomere sowie deren Salze und Derivate und vorzugsweise Acrylsäure, Methacrylsäure, Ethacrylsäure, α-Chloroacrylsäure, β-Cyanoacrylsäure, β-Methylacrylsäure (Crotonsäure), α-Phenylacrylsäure, β-Acryloxypropionsäure, Sorbinsäure, α-Chlorsorbinsäure, 2'-Methylisocrotonsäure, Zimtsäure, p-Chlorzimtsäure, β-Stearylsäure, Itaconsäure, Citraconsäure, Mesacronsäure, Glutaconsäure, Aconitsäure, Maleinsäure, Fumarsäure, Tricarboxyethylen, Maleinsäureanhydrid oder beliebige Mischungen daraus.

Als Acryl- oder Methacrylsulfonsäure kommt mindestens ein Vertreter der Reihe Sulfoethylacrylat, Sulfoethylmethacrylat, Sulfopropylacrylat, Sulfopropylmethacrylat, 2-Hydroxy-3-methacryloxypropylsulfonsäure und 2-Acrylamido-2-methylpropansulfonsäure (AMPS) in Frage.

Besonders geeignete nicht ionische Monomere sollten ausgewählt worden sein aus der Reihe der wasserlöslichen Acrylamid-Derivate, vorzugsweise alkylsubstituierte Acrylamide oder aminoalkylsubstituierte Derivate des Acrylamids oder des Methacrylamids und besonders bevorzugt Acrylamid, Methacrylamid, N-Methylacrylamid, N-Methylmethacrylamid, N,N-Dimethylacrylamid, N-Ethylacrylamid, N,N-Diethylacrylamid, N-Cyclohexylacrylamid, N-Benzylacrylamid, N,N-Dimethylaminopropylacrylamid, N,N-Dimethylaminoethylacrylamid, N-tertiär Butylacrylamid, N-Vinylformamid, N-Vinylacetamid, Acrylnitril, Methacrylnitril, oder beliebige Mischungen daraus. Weitere geeignete Monomere sind erfindungsgemäß Vinyllactame wie N-Vinylpyrrolidon oder N-Vinylcaprolactam und Vinylether wie Methylpolyethylenglykol-(350 bis 3000)-monovinylether, oder solche, die sich von Hydroxybutylvinylether ableiten wie Polyethylenglykol-(500 bis 5000)-vinyloxy-butylether, Polyethylenglykol-block-propylenglykol-(500 bis 5000)-vinyloxy-butylether, wobei natürlich auch in diesen Fällen Mischungsformen in Frage kommen.

Im Folgenden werden die reinen Ausführungsformen näher beschrieben:

### Variante a): Kombination eines hydrolysestabilen und eines hydrolyselabilen Vernetzers

In dieser reinen Ausführungsform a) wird die Zeitverzögerung durch eine spezielle Kombination der Vernetzer erreicht. Die Kombination zweier oder mehrerer Vernetzer in einem superabsorbierenden Polymer an sich ist nicht neu. Sie wird z.B. in US 5837789 ausführlich diskutiert. In der Vergangenheit wurde die Kombination von Vernetzern aber eingesetzt, um die antagonistischen Eigenschaften Absorptionskapazität und löslicher Anteil, sowie Absorptionskapazität und Permeabilität zu verbessern. Eine hohe Absorption wird nämlich durch niedrige Vernetzermengen begünstigt; dies führt aber zu erhöhten löslichen Anteilen und umgekehrt. Die Kombination von verschiedenen Vernetzern bildet in Summe über die drei Eigenschaften Absorptionskapazität, löslicher Anteil und Permeabilität bessere Produkte. Die Verzögerung der Quellung um mehrere Minuten durch eine Vernetzerkombination und insbesondere auf > 10 Minuten war bislang nicht bekannt. Wenn bspw. im Bereich der superabsorbierenden Polymere für Windeln eine zeitliche Verzögerung eingestellt wird, damit erst die Flüssigkeit in der Windel verteilt und dann absorbiert wird, liegt man üblicherweise im Bereich von wenigen Sekunden.

Bevorzugt liegen die erfindungsgemäßen Superabsorber dieser Ausführungsform a) entweder als anionische oder kationische Polyelektrolyte, im Wesentlichen aber nicht als Polyampholyte vor. Unter Polyampholyten versteht man Polyelektrolyte, die sowohl kationische als auch anionische Ladungen an der Polymerkette tragen. Bevorzugt sind also in diesem Fall Copolymere rein anionischer oder rein kationischer Natur und keine Polyampholyte. Allerdings können bis zu 10 Mol-%, bevorzugt weniger als 5 Mol-% der Gesamtladung eines Polyelektrolyten, durch entgegengesetzte Ladungsanteile ersetzt sein. Dies gilt sowohl für den Fall überwiegend anionischer Copolymere mit einem relativ kleinen kationischen Anteil als auch umgekehrt für überwiegend kationische Copolymere mit einem relativ kleinen anionischen Anteil.

Geeignete Monomere für anionische superabsorbierende Polymere sind bspw. ethylenisch ungesättigte, wasserlösliche Carboxylsäuren und Carboxylsäurederivate oder ethylenisch ungesättigte Sulfonsäuremonomere.

Als ethylenisch ungesättigte Carbonsäure oder Carbonsäureanhydridmonomere sind Acrylsäure, Methacrylsäure, Ethacrylsäure, α-Chloracrylsäure, α-Cyanoacrylsäure, β-Methylacrylsäure (Crotonsäure), α-Phenylacrylsäure, β-Acryloxypropionsäure, Sorbinsäure, α-Chlorsorbinsäure, 2'-Methylisocrotonsäure, Zimtsäure, p-Chlorzimtsäure, β-Stearylsäure, Itaconsäure, Citraconsäure, Mesacronsäure, Glutaconsäure, Aconitsäure, Maleinsäure, Fumarsäure, Tricarboxyethylen und Maleinsäureanhydrid bevorzugt, wobei Acrylsäure und Methacrylsäure besonders bevorzugt sind. Ethylenisch ungesättigte Sulfonsäuremonomere sind vorzugsweise aliphatische oder aromatische Vinylsulfonsäuren oder acrylische oder methacrylische Sulfonsäuren. Als aliphatische oder aromatische Vinylsulfonsäuren sind Vinylsulfonsäure, Allylsulfonsäure, Vinyltoluolsulfonsäure und Stryrolsulfonsäure bevorzugt.

Als Acryl- bzw. Methacrylsulfonsäuren sind Sulfoethylacrylat, Sulfoethylmethacrylat, Sulfopropylacrylat, Sulfopropylmethacrylat, 2-Hydroxy-3-methacryloxypropylsulfonsäure und 2-Acrylamido-2-methylpropansulfonsäure bevorzugt, wobei 2-Acrylamido-2-methylpropansulfonsäure besonders bevorzugt ist.

Alle aufgeführten Säuren können als freie Säuren oder als Salze polymerisiert worden sein. Natürlich ist auch eine teilweise Neutralisation möglich. Ferner kann die Neutralisation teilweise oder ganz auch erst nach der Polymerisation erfolgt sein. Die Neutralisation der Monomere kann mit Alkalimetallhydroxiden, Erdalkalimetallhydroxiden oder Ammoniak erfolgen. Daneben ist jede weitere organische oder anorganische Base denkbar, die mit der Säure ein wasserlösliches Salz bildet. Auch eine Mischneutralisation mit verschiedenen Basen ist denkbar. Als bevorzugt wird von der Erfindung die Neutralisation mit Ammoniak und Alkalimetallhydroxiden und besonders bevorzugt mit Natriumhydroxid angesehen.

Daneben können auch weitere nicht-ionische Monomere verwendet worden sein, mit denen die Anzahl der anionischen Ladungen in der Polymerkette eingestellt werden kann. Mögliche wasserlösliche Acrylamid-Derivate sind alkylsubstituierte Acrylamide oder aminoalkylsubstituierte Derivate des Acrylamides oder des Methacrylamides, wie z.B. Acrylamid, Methacrylamid, N-Methylacrylamid, N-Methylmethacrylamid, N,N-Dimethylacrylamid, N-Ethylacrylamid, N,N-Diethylacrylamid, N-Cyclohexylacrylamid, N-Benzylacrylamid, N,N-Dimethylaminopropylacrylamid, N,N-Dimethylaminoethylacrylamid und/oder N-tertiär Butylacrylamid. Weitere geeignete nicht-ionische Monomere sind N-Vinylformamid, N-Vinylacetamid, Acrylnitril und Methacrylnitril, aber auch Vinyllactame wie N-Vinylpyrrolidon oder N-Vinylcaprolactam und Vinylether wie Methylpolyethylenglykol-(350 bis 3000)-monovinylether, oder solche, die sich von Hydroxybutylvinylether ableiten wie Polyethylenglykol-(500 bis 5000)-vinyloxy-butylether, Polyethylenglykol-block-propylenglykol-(500 bis 5000)-vinyloxy-butylether, und geeignete Mischungen daraus.

Des Weiteren enthalten die erfindungsgemäßen superabsorbierenden Polymere mindestens zwei Vernetzer: Allgemein stellt ein Vernetzer eine Verknüpfung zwischen zwei Polymerketten her, die dazu führt, dass die superabsorbierenden Polymere zwar wasserquellbare, aber wasserunlösliche Netzwerke bilden. Eine Klasse von Vernetzern stellen Monomere mit mindestens zwei unabhängig voneinander einbaubaren Doppelbindungen, die zum Aufbau eines Netzwerkes führen, dar. Im Rahmen der vorliegenden Erfindung wurde mindestens ein Vernetzer aus der Gruppe der hydrolysestabilen und mindestens ein Vernetzer aus der Gruppe der hydrolyselabilen Vernetzer ausgewählt. Unter einem hydrolysestabilen Vernetzer soll erfindungsgemäß ein Vernetzer verstanden werden, der im Netzwerk eingebaut bei allen pH-Werten seine vernetzende Wirkung behält. Die Verknüpfungspunkte des Netzwerkes können also nicht durch eine Änderung des Quellmediums aufgebrochen werden. Im Gegensatz dazu steht der hydrolyselabile Vernetzer, der im Netzwerk eingebaut seine vernetzende Wirkung durch eine Änderung des pH-Wertes verlieren kann. Ein Beispiel hierfür ist ein Diacrylatvernetzer, der durch alkalische Esterhydrolyse bei einem hohen pH-Wert seine vernetzende Wirkung verliert.

Mögliche hydrolysestabile Vernetzer sind N,N'-Methylenbisacrylamid, N,N'-Methylenbismethacrylamid und mehr als eine Maleinimidgruppe aufweisende Monomere wie Hexamethylenbismaleinimid; mehr als eine Vinylethergruppe aufweisende Monomere wie Ethylenglykoldivinylether, Triethylenglykoldivinylether und/oder Cyclohexandioldivinylether. Auch können Allylamino- oder Allylammonium-Verbindungen mit mehr als einer Allylgruppe, wie Triallylamin und/oder Tetraallylammoniumsalze eingesetzt werden. Zu den hydrolysestabilen Vernetzern gehören auch die Allylether, wie Tetraallyloxyethan und Pentaerythrittriallylether.

Aus der Gruppe der mehr als eine vinylaromatische Gruppe aufweisenden Monomere seien Divinylbenzol und Triallylisocyanurat genannt.

Von der vorliegenden Erfindung wird es als bevorzugt angesehen, dass in der Verfahrensvariante a) als hydrolysestabiler Vernetzer mindestens ein Vertreter der Reihe N,N'-Methylenbisacrylamid, N,N'Methylenbismethacrylamid oder Monomere mit mindestens einer Maleinimidgruppe, vorzugsweise Hexamethylenbismaleinimid, Monomere mit mehr als einer Vinylethergruppe, vorzugsweise Ethylenglykoldivinylether, Triethylenglykoldivinylether, Cyclohexandioldivinylether, Allylamino- oder Allylammoniumverbindungen mit mehr als einer Allylgruppe, vorzugsweise Triallylamin oder ein Tetraallylammoniumsalz wie Tetraallylammoniumchlorid, oder Allylether mit mehr als einer Allylgruppe, wie Tetraallyloxyethan und Pentaerythrittriallylether, oder Monomere mit vinylaromatischen Gruppen, vorzugsweise Divinylbenzol und Triallylisocyanurat, oder Diamine, Triamine, Tetramine oder höherwertige Amine, vorzugsweise Ethylendiamin und Diethylentriamin eingesetzt wurden.

Hydrolyselabile Vernetzer können sein: Mehrfach (meth)acrylfunktionelle Monomere, wie 1,4-Butandioldiacrylat, 1,4-Butandioldimethacrylat, 1,3-Butylenglykoldiacrylat, 1,3-Butylenglykoldimethacrylat, Diethylenglykoldiacrylat, Diethylenglykoldimethacrylat, Ethylenglykoldiacrylat, Ethylenglykoldimethacrylat, ethoxyliertes Bisphenol-A-diacrylat, ethoxyliertes Bisphenol-A-dimethacrylat, 1,6-Hexandioldiacrylat, 1,6-Hexandioldimethacrylat, Neopentylglykoldimethacrylat, Polyethylenglykoldiacrylat, Polyethylenglykoldimethacrylat, Triethylenglykoldiacrylat, Triethylenglykoldimethacrylat, Tripropylenglykoldiacrylat, Tetraethylenglykoldiacrylat, Tetraethylenglykoldimethacrylat, Dipentaerythritpentaacrylat, Pentaerythrittetraacrylat, Pentaerythrittriacrylat, Trimethylolpropantriacrylat, Trimethyloltrimethacrylat, Cyclopentadiendiacrylat, Tris(2-hydroxyethyl)isocyanurattriacrylat und/oder Tris(2-hydroxy)isocyanurattrimethacrylat; mehr als eine Vinylester-, bzw. Allylestergruppe mit entsprechender Carbonsäure aufweisende Monomere wie Divinylester von Polycarbonsäuren, Diallylester von Polycarbonsäuren, Triallylterephthalat, Diallylmaleat, Diallylfumarat, Trivinyltrimellitat, Divinyladipat und/oder Diallylsuccinat.

Als bevorzugte Vertreter der hydrolyselabilen Vernetzer wurden in der Herstellungsvariante a) Verbindungen eingesetzt, die ausgewählt wurden aus der Reihe der Di-, Trioder Tetra(meth)acrylate, wie 1,4-Butandioldiacrylat, 1,4-Butandioldimethacrylat, 1,3-Butylenglykoldiacrylat, 1,3-Butylenglykoldimethacrylat, Diethylenglykoldiacrylat, Diethylenglykoldimethacrylat, Ethylenglykoldiacrylat, Ethylenglykoldimethacrylat, ethoxyliertes Bisphenol-A-diacrylat, ethoxyliertes Bisphenol-A-dimethacrylat, 1,6-Hexandioldiacrylat, 1,6-Hexandioldimethacrylat, Neopentylglykoldimethacrylat, Polyethylenglykoldiacrylat, Polyethylenglykoldimethacrylat, Triethylenglykoldiacrylat, Triethylenglykoldimethacrylat, Tripropylenglykoldiacrylat, Tetraethylenglykoldiacrylat, Tetraethylenglykoldimethacrylat, Dipentaerythritpentaacrylat, Pentaerythrittetraacrylat, Pentaerythrittriacrylat, Trimethylolpropantriacrylat, Trimethylolpropantrimethacrylat, Cyclopentadiendiacrylat, Tris(2-hydroxyethyl)isocyanurattriacrylat und/oder Tris(2-hydroxy)isocyanurat-trimethacrylat, der mehr als eine Vinylester-, bzw. Allylestergruppe mit entsprechenden Carbonsäuren aufweisenden Monomere wie Divinylester von Polycarbonsäuren, Diallylester von Polycarbonsäuren, Triallylterephthalat, Diallylmaleat, Diallylfumarat, Trivinyltrimellitat, Divinyladipat und/oder Diallylsuccinat, oder mindestens ein Vertreter der Verbindungen mit mindestens einer vinylischen oder allylischen Doppelbindung und mindestens einer Epoxygruppe wie Glycidylacrylat, Allylglycidether oder der Verbindungen mit mehr als einer Epoxygruppe wie Ethylenglykoldiglycidether, Diethylenglykoldiglycidether, Polyethylenglykoldiglydidether, Polypropylenglykoldiglycidether oder der Verbindungen mit mindestens einer vinylischen oder allylischen Doppelbindung und mindestens einer (Meth)acrylatgruppe wie Polyethylenglykolmonoallyl-etheracrylat oder Polyethylenglykolmonoallylether-methacrylat.

Weitere Vernetzer, die funktionelle Gruppen sowohl aus der Klasse der hydrolyselabilen als auch der hydrolysestabilen Vernetzer enthalten, sollen dann zu den hydrolyselabilen Vernetzern gezählt werden, wenn sie maximal einen hydrolysestabilen Vernetzungspunkt bilden. Typische Beispiele für solche Vernetzer sind Polyethylenglykol-monoallylether-acrylat und Polyethylenglykol-monoallylether-methacrylat.

Neben den Vernetzern mit zwei oder mehr Doppelbindungen gibt es auch solche, die nur eine oder keine Doppelbindung enthalten, dafür aber andere funktionelle Gruppen, die mit den Monomeren reagieren können und die während des Herstellungsprozesses zu Vernetzungspunkten führen. Zwei häufig verwendete funktionelle Gruppen sind vor allem Epoxygruppen und Aminogruppen. Beispiele für solche Vernetzer mit einer Doppelbindung sind Glycidylacrylat, Allylglycidether. Beispiele für Vernetzer ohne Doppelbindung sind Diamine, Triamine oder Verbindungen mit vier oder mehr Aminogruppen wie Ethylendiamin, Diethylentriamin, oder Diepoxide wie Ethylenglykoldiglycidether, Diethylenglykoldiglycidether, Polyethylenglykoldiglycidether, Polypropylenglykoldiglycidether.

Bei der Herstellung der erfindungsgemäßen SAP werden üblicherweise in Summe so hohe Vernetzermengen eingesetzt, dass ein sehr engmaschiges Netzwerk entsteht. Damit weist das polymere Produkt eine nur geringe Aufnahmekapazität nach kurzen Zeiten (> 5 min; < 10 min) auf.

Von den hydrolysestabilen Vernetzern wurden in der Verfahrensvariante a) zwischen 0,01 und 1,0 Mol-%, bevorzugt zwischen 0,03 und 0,7 Mol-% und besonders bevorzugt 0,05 bis 0,5 Mol-% eingesetzt. Von den hydrolyselabilen Vernetzern werden deutlich höhere Mengen benötigt: Zum Einsatz kamen erfindungsgemäß 0,1 bis 10,0 Mol-%, bevorzugt 0,3 bis 7 Mol-% und besonders bevorzugt 0,5 bis 5,0 Mol-%.

Unter den erfindungsgemäß bevorzugten Anwendungsbedingungen werden die bei der Polymerisation gebildeten hydrolyselabilen Netzwerkverknüpfungen wieder gelöst. Die Aufnahmekapazität des erfindungsgemäßen superabsorbierenden Polymers wird dadurch deutlich erhöht. Die benötigten Mengen für die Vernetzer sind aber der jeweiligen Anwendung anzupassen und in anwendungstechnischen Prüfungen (für Baustoffsysteme besonders im zeitabhängigen Ausbreitmaß) zu ermitteln.

Kationische superabsorbierende Polymere enthalten ausschließlich kationische Monomere. Für kationische superabsorbierende Polymere der Ausführungsform a) können alle Monomere mit einer permanenten kationischen Ladung verwendet werden. Permanent bedeutet wiederum, dass die kationische Ladung in alkalischem Milieu überwiegend stabil erhalten bleibt; ein Ester-quat ist bspw. nicht geeignet. Als nicht-ionische Comonomere und Vernetzer können alle unter den anionischen superabsorbierenden Polymeren aufgeführten Monomere verwendet werden, wobei die oben genannten Molverhältnisse zur Anwendung kommen. Mögliche kationischen Monomer sind: [3-(Acryloylamino)-propyl]-trimethylammoniumsalze und/oder [3-(Methacryloylamino)-propyl]-trimethylammoniumsalze. Die genannten Salze liegen bevorzugt als Halogenide, Sulfate oder Methosulfate vor. Daneben kann Diallyldimethylammoniumchlorid verwendet werden.

Die Herstellung der erfindungsgemäßen anionischen oder kationischen superabsorbierenden Copolymere kann in an sich bekannter Weise durch Verknüpfung der die jeweiligen Struktureinheiten bildenden Monomere durch radikalische Polymerisation erfolgen. Alle als Säure vorliegenden Monomere können als freie Säuren oder in deren Salzform polymerisiert werden. Ferner kann die Neutralisation der Säuren durch Zugabe entsprechender Basen auch nach der Copolymerisation erfolgen; eine Teilneutralisation vor oder nach der Polymerisation ist ebenfalls möglich. Die Neutralisation der Monomere oder der Copolymere kann beispielsweise mit den Basen Natrium-, Kalium-, Calcium-, Magnesiumhydroxid und/oder Ammoniak erfolgen. Ebenfalls als Basen geeignet sind primäre, sekundäre oder tertiäre und jeweils verzweigte oder unverzweigte Alkylgruppen aufweisende C₁- bis C₂₀-Alkylamine, C₁- bis C₂₀-Alkanolamine, C₅- bis C₈-Cycloalkylamine und/oder C₆- bis C₁₄-Arylamine. Es können eine Base oder mehrere eingesetzt werden. Bevorzugt ist die Neutralisation mit Alkalimetallhydroxiden und/oder Ammoniak; besonders geeignet ist Natriumhydroxid. Die anorganischen oder organischen Basen sollten so ausgewählt werden, dass sie mit der jeweiligen Säure gut wasserlösliche Salze bilden.

Bei allen aminischen Basen sowie Ammoniak sollte im Anwendungsfall geprüft werden, ob sich durch das alkalische Milieu, das durch das Porenwasser gebildet wird, ein fischartiger und/oder ammonikalischer Geruch bildet, da dies evtl. ein Ausscheidungskriterium sein kann.

Wie ebenfalls bereits allgemein erwähnt, sollte die Copolymerisation der Monomere bevorzugt durch radikalische Substanz-, Lösungs-, Gel-, Emulsions-, Dispersions- oder Suspensionspolymerisation erfolgen. Da es sich bei den erfindungsgemäßen Produkten um hydrophile und in Wasser quellbare Copolymere handelt, sind die Polymerisation in wässriger Phase, die Polymerisation in umgekehrter Emulsion (Wasser-in-Öl) und die Polymerisation in inverser Suspension (Wasser-in-Öl) bevorzugte Varianten. In besonders bevorzugten Ausführungsformen erfolgt die Umsetzung als Gelpolymerisation oder aber als inverse Suspensionspolymerisation in organischen Lösemitteln.

Auch kann die Verfahrensvariante a) als adiabatische Polymerisation durchgeführt und sowohl mit einem Redox-Initiatorsystem als auch mit einem Photoinitiator gestartet worden sein. Möglich ist aber auch eine Kombination von beiden Varianten der Initiierung. Das Redox-Initiatorsystem besteht aus mindestens zwei Komponenten, einem organischen oder anorganischen Oxidationsmittel und einem organischen oder anorganischen Reduktionsmittel. Häufig werden dabei Verbindungen mit Peroxideinheiten verwendet, z.B. anorganische Peroxide wie Alkalimetall- und Ammoniumpersulfat, Alkalimetall- und Ammoniumperphosphate, Wasserstoffperoxid und dessen Salze (Natriumperoxid, Bariumperoxid) oder organische Peroxide wie Benzoylperoxid, Butylhydroperoxid oder Persäuren wie Peressigsäure. Daneben können aber auch andere Oxidationsmittel eingesetzt werden, zum Beispiel Kaliumpermanganat, Natrium- und Kaliumchlorat, Kaliumdichromat usw. Als Reduktionsmittel können schwefelhaltige Verbindungen wie Sulfite, Thiosulfate, Sulfinsäure, organische Thiole (zum Beispiel Ethylmercaptan, 2-Hydroxyethanthiol, 2-Mercaptoethylammoniumchlorid, Thioglykolsäure) und andere verwendet werden. Daneben sind Ascorbinsäure und niedervalente Metallsalze [Kupfer(I); Mangan(II); Eisen(II)] geeignet. Auch Phosphorverbindungen wie zum Beispiel Natriumhypophosphit, können verwendet werden. Photopolymerisationen werden ihrem Namen entsprechend mit UV-Licht gestartet, was im Zerfall eines Photoinitiators resultiert. Als Photoinitiator können zum Beispiel Benzoin- und Benzoinderivate, wie Benzoinether, Benzil und seine Derivate, wie Benzilketale, Acryldiazoniumsalze, Azoinitiatoren wie z.B. 2,2'-Azobis(isobutyronitril), 2,2'-Azobis(2-amidinopropan)-hydrochlorid und/oder Acetophenonderivate verwendet werden. Der Gewichtsanteil der oxidierenden und der reduzierenden Komponente im Falle der Redox-Initiatorsysteme liegt vorzugsweise jeweils im Bereich zwischen 0,00005 und 0,5 Gew. %, besonders bevorzugt jeweils zwischen 0,001 und 0,1 Gew. %. Für Photoinitiatoren liegt dieser Bereich bevorzugt zwischen 0,001 und 0,1 Gew. % und besonders bevorzugt zwischen 0,002 und 0,05 Gew. %. Die genannten Gewichtsprozentangaben für die oxidierende und reduzierende Komponente und die Photoinitiatoren beziehen sich dabei jeweils auf die Masse der zur Copolymerisation eingesetzten Monomere. Die Auswahl der Polymerisationsbedingungen, insbesondere der Initiatormengen, erfolgt stets mit dem Ziel, möglichst langkettige Polymere zu erzeugen. Aufgrund der Unlöslichkeit der vernetzten Copolymere ist die Bestimmung der Molekulargewichte allerdings nur sehr schwer möglich.

Die Copolymerisation wird bevorzugt in wässriger Lösung, insbesondere in konzentrierter wässriger Lösung diskontinuierlich in einem Polymerisationsgefäß (Batchverfahren) oder kontinuierlich nach der z. B. in der US-A-485761 0 beschriebenen "endlosen Band"-Methode durchgeführt. Eine weitere Möglichkeit ist die Polymerisation in einem kontinuierlich oder diskontinuierlich betriebenen Knetreaktor. Der Prozess wird üblicherweise bei einer Temperatur zwischen -20 und 20 °C, bevorzugt zwischen -10 und 10 °C gestartet und bei Atmosphärendruck und ohne äußere Wärmezufuhr durchgeführt, wobei durch die Polymerisationswärme eine vom Monomergehalt abhängige maximale Endtemperatur von 50 bis 150 °C erhalten wird. Nach dem Ende der Copolymerisation erfolgt in der Regel eine Zerkleinerung des als Gel vorliegenden Polymerisates. Das zerkleinerte Gel wird im Falle einer Durchführung im Labormaßstab in einem Umlufttrockenschrank bei 70 bis 180 °C, bevorzugt bei 80 bis 150 °C getrocknet. Im industriellen Maßstab kann die Trocknung auch auf kontinuierliche Weise in den gleichen Temperaturbereichen, zum Beispiel auf einem Bandtrockner oder in einem Wirbelbetttrockner erfolgen. In einer weiteren bevorzugten Ausführungsform ist die Copolymerisation als inverse Suspensionspolymerisation der wässrigen Monomerphase in einem organischen Lösemittel erfolgt. Hierbei wird bevorzugt so verfahren, dass man das in Wasser gelöste und gegebenenfalls neutralisierte Monomergemisch in Gegenwart eines organischen Lösemittels, in welchem die wässrige Monomerphase nicht oder schwer löslich ist, polymerisiert. Vorzugsweise wird in Gegenwart von "Wasser-in-Öl"-Emulgatoren (W/O-Emulgatoren) und/oder Schutzkolloiden auf Basis nieder- oder hochmolekularer Verbindungen gearbeitet, die in Anteilen von 0,05 bis 5 Gew. %, bevorzugt 0,1 bis 3 Gew. % (jeweils bezogen auf die Monomere) verwendet werden. Die W/O-Emulgatoren und Schutzkolloide werden auch als Stabilisatoren bezeichnet. Es können übliche, in der inversen Suspensionspolymerisationstechnik als Stabilisatoren bekannte Verbindungen wie Hydroxypropylcellulose, Ethylcellulose, Methylcellulose, Celluloseacetatbutyratmischether, Copolymere aus Ethylen und Vinylacetat, aus Styrol und Butylacrylat, Polyoxyethylensorbitanmonooleat, -laurat, bzw. - stearat und Blockcopolymere aus Propylen- und/oder Ethylenoxid verwendet werden. Als organische Lösemittel sind beispielsweise lineare aliphatische Kohlenwasserstoffe wie n-Pentan, n-Hexan, n-Heptan, verzweigte aliphatische Kohlenwasserstoffe (Isoparaffine), cycloaliphatische Kohlenwasserstoffe wie Cyclohexan und Decalin, sowie aromatische Kohlenwasserstoffe wie Benzol, Toluol und Xylol geeignet. Darüber hinaus eignen sich auch Alkohole, Ketone, Carbonsäureester, Nitroverbindungen, halogenhaltige Kohlenwasserstoffe, Ether und viele andere organische Solventien. Bevorzugt sind solche organischen Lösemittel, die mit Wasser azeotrope Gemische bilden, besonders bevorzugt sind solche, die dabei einen möglichst hohen Wasseranteil im Azeotrop aufweisen.

Die wasserquellbaren Copolymere (SAP-Vorstufe) fallen zunächst in gequollener Form als fein verteilte wässrige Tröpfchen im organischen Suspensionsmedium an und werden vorzugsweise durch Entfernen des Wassers durch azeotrope Destillation als feste kugelförmige Partikel im organischen Suspensionsmittel isoliert. Nach Abtrennung des Suspensionsmittels und Trocknung verbleibt ein pulverförmiger Feststoff. Die inverse Suspensionspolymerisation hat bekanntlich den Vorteil, dass durch Variation der Polymerisationsbedingungen die Partikelgrößenverteilung der Pulver kontrolliert werden kann. Ein zusätzlicher Verfahrensschritt (Mahlvorgang) zur Einstellung der Partikelgrößenverteilung kann dadurch meist vermieden werden.

Die Monomere und Vernetzer sollten unter Beachtung der jeweiligen, zum Teil spezifischen Bedürfnisse der Anwendung ausgewählt werden. So sollte bei hohen Salzfrachten im Baustoffsystem auf salzstabile Monomerzusammensetzungen zurückgegriffen werden, die z.B. auf Sulfonsäure-basierten Monomeren beruhen können. Dabei wird über die Monomerzusammensetzung und die hydrolysestabilen Vernetzer die Endabsorption eingestellt, während der hydrolyselabile Vernetzer die Kinetik der Quellung beeinflusst. Dabei ist allerdings zu berücksichtigen, dass die Monomerzusammensetzung und der Vernetzer auch einen gewissen Einfluss auf die Kinetik nehmen können, der von Fall zu Fall unterschiedlich und vor allem gegenüber dem Einfluss des hydrolyselabilen Vernetzers geringer ausgeprägt ist. Sowohl der hydrolysestabile als auch der hydrolyselabile Vernetzer sollten erfindungsgemäß gleichmäßig eingebaut werden. Andernfalls würden sich z.B. Bereiche bilden, die an hydrolyselabilem Vernetzer verarmt sind und deshalb schnell zu quellen beginnen, ohne die gewünschte zeitliche Verzögerung zu zeigen. Eine zu hohe Reaktivität des Vernetzers kann dazu führen, dass er bereits vor dem Ende der Polymerisation aufgebraucht ist, weshalb am Ende der Polymerisation kein Vernetzer mehr zur Verfügung steht. Eine zu geringe Reaktivität bewirkt, dass am Anfang der Polymerisation vernetzerarme Bereiche gebildet werden. Zusätzlich besteht immer die Gefahr, dass die zweite Doppelbindung nicht vollständig eingebaut wird - damit wäre die vernetzende Funktion nicht gegeben. Die Länge der Brücke zwischen den Vernetzungspunkten kann ebenfalls einen Einfluss auf die Hydrolyse-Kinetik besitzen. Sterische Hinderung kann die Hydrolyse verlangsamen. Insgesamt wird die Wahl der Zusammensetzung des superabsorbierenden Polymers durch die Anwendung (Baustoffsystem und Zeitfenster der Hydrolyse) beeinflusst. Die vorliegende Erfindung stellt allerdings ausreichend viele Variations- und Auswahlmöglichkeiten zur Verfügung, weshalb es ohne Probleme möglich ist, geeignete hydrolysestabile oder hydrolyselabile Vernetzer auszuwählen, z.B. um ein homogenes Netzwerk zu gewährleisten.

### Variante b): Kombination eines permanent anionischen Monomer mit einem hydrolysierbaren kationischen Monomer

In dieser zweiten Ausführungsform wird die Zeitverzögerung der Quellungswirkung des SAP durch eine spezielle Kombination der Monomere erreicht.

Die Superabsorber dieser erfindungsgemäßen Ausführungsform b) liegen als Polyampholyte vor. Unter Polyampholyten versteht man Polyelektrolyte, die sowohl kationische als auch anionische Ladungen an der Polymerkette tragen. Durch Kombination von kationischer und anionischer Ladung innerhalb der Polymerkette bilden sich starke intramolekulare Anziehungskräfte, die dazu führen, dass die Aufnahmekapazität deutlich reduziert wird, oder sogar gänzlich gegen Null geht.
In der Ausführungsform b) wurden die kationischen Monomere so gewählt, dass sie mit der Zeit ihre kationische Ladung verlieren und neutral oder sogar anionisch werden. Die beiden folgenden Reaktionsschemata sollen dies näher erläutern:
Im ersten Fall wird ein kationisches Esterquat als polymerisierter Bestandteil des SAP im Laufe der Anwendung durch eine alkalische Hydrolyse zu einem Carboxylat.
Im zweiten Fall wird ein kationisches Acrylamid-Derivat durch eine Neutralisation nichtionisch.

Als anionische Monomere kommen in dieser Verfahrensvariante b) alle bezüglich der Verfahrensvariante a) bereits genannten anionischen Monomere in Frage. Als bevorzugt werden erfindungsgemäß Vertreter aus der Reihe der ethylenisch ungesättigten wasserlöslichen Carboxylsäuren und ethylenisch ungesättigten Sulfonsäuremonomere sowie deren Salze und Derivate, insbesondere Acrylsäure, Methacrylsäure, Ethacrylsäure, α-Chloracrylsäure, α-Cyanoacrylsäure, β-Methylacrylsäure (Crotonsäure), α-Phenylacrylsäure, β-Acryloxypropionsäure, Sorbinsäure, α-Chlorsorbinsäure, 2'-Methylisocrotonsäure, Zimtsäure, p-Chlorzimtsäure, β-Stearylsäure, Itaconsäure, Citraconsäure, Mesacronsäure, Glutaconsäure, Aconitsäure, Maleinsäure, Fumarsäure, Tricarboxyethylen und Maleinsäureanhydrid, besonders bevorzugt Acrylsäure, Methacrylsäure, aliphatische oder aromatische Vinylsulfonsäuren und insbesondere bevorzugt Vinylsulfonsäure, Allylsulfonsäure, Vinyltoluolsulfonsäure, Styrolsulfonsäure, Acryl- und Methacrylsulfonsäuren und noch mehr bevorzugt Sulfoethylacrylat, Sulfoethylmethacrylat, Sulfopropylacrylat, Sulfopropylmethacrylat, 2-Hydroxy-3-methacryloxypropylsulfonsäure und 2-Acrylamido-2-methylpropansulfonsäure (AMPS), oder deren Mischungen angesehen.

Kationische Monomere für den Fall 1 in Abbildung 1 können z.B. sein: [2-(Acryloyloxy)-ethyl]-trimethylammoniumsalze und [2-(Methacryloyloxy)-ethyl]-trimethylammoniumsalze. Prinzipiell sind alle polymerisierbaren kationischen Ester von Vinylverbindungen denkbar, deren kationische Ladung durch Hydrolyse abgespalten werden kann.

Kationische Monomere für den Fall 2 in Abbildung 1 können z.B. sein: Salze von 3-Dimethylaminopropylacrylamid oder 3-Dimethylaminopropylmethacrylamid, wobei das Hydrochlorid und Hydrosulfat bevorzugt sind. Prinzipiell sind alle Monomere anwendbar, die vinylisch polymerisierbar sind und eine Aminofunktion tragen, die protoniert werden kann. Bevorzugte Vertreter der kationischen Monomere sind gemäß vorliegender Erfindung polymerisierbare kationische Ester von Vinylverbindungen, deren kationische Ladung durch Hydrolyse abgespalten werden kann, vorzugsweise [2-(Acryloyloxy)-ethyl]-trimethylammoniumsalze und [2-(Methacryloyloxy)-ethyl]- methylammoniumsalze, oder Monomere, die vinylisch polymerisierbar sind und eine Aminofunktion tragen, die protoniert werden kann, vorzugsweise Salze von 3-Dimethylaminopropylacrylamid oder 3-Dimethylaminopropylmethacrylamid und besonders bevorzugt deren Hydrochlorid und Hydrosulfat, oder Mischungen daraus.

Da die erfindungsgemäßen, nach der Verfahrensvariante b) hergestellten SAP vor allem für Anwendungen mit einem hohen pH-Wert geeignet sind, was insbesondere bei zementären Systemen verwirklicht ist, sollte mindestens ein Vernetzer aus der oben beschriebenen Gruppe der hydrolysestabilen Vernetzer ausgewählt werden.

Die vorliegende Erfindung sieht auch vor, dass die Herstellung der SAP nach allen Varianten erfolgen kann, wie sie unter der Ausführungsform a) bereits beschriebenen wurden.

Zur Steuerung der Zeitverzögerung ist es grundsätzlich möglich, zusätzliche Monomere aus der Gruppe der oben beschriebenen nicht-ionischen Monomere in das erfindungsgemäße superabsorbierende Polymer einzubauen. Der Einsatz nicht-ionischer Monomere bewirkt eine Beschleunigung des Aufbaus der Absorptionskapazität.

Auch für die zweite erfindungsgemäße Verfahrensvariante b) ist es wichtig, zunächst eine Absorption von nahe Null in demineralisiertem Wasser zu erreichen. Dies gelingt durch die Auswahl der richtigen Mengen an kationischen und anionischen Monomeren. Idealerweise wird die minimale Aufnahme bei einem molaren Verhältnis der kationischen zu anionischen Monomere von 1:1 erreicht. Bei schwachen Säuren oder Basen kann es notwendig werden, eine molare Verteilung einzustellen, die von 1:1 abweicht (bspw. 1,1 bis 2,0 : 2,0 bis 1,1).

Falls ein eher schnelles zeitverzögertes Quellen gefordert ist, kann auch eine geringe Absorption eingestellt werden. Auch dies wird durch eine vom Verhältnis 1:1 abweichende Monomerzusammensetzung (bspw. 1,1 bis 2,0 : 2,0 bis 1,1) erreicht. Durch die geringe Restabsorption nimmt das zeitverzögerte superabsorbierende Polymer ein wenig Wasser, bzw. wässrige Lösung in der Anwendung auf und die Neutralisation/Hydrolyse findet schneller statt. In allen Fällen der Verfahrensvariante b) liegt das Molverhältnis von anionischem zu kationischem Monomer bei 0,3 bis 2,0:1,0, bevorzugt von 0,5 bis 1,5:1,0 und besonders bevorzugt bei 0,7 bis 1,3:1,0.

Eine weitere prinzipielle Möglichkeit zur Steuerung der Kinetik ist der Zusatz von Salz. Polyampholyte weisen oft einen inversen Elektrolyteffekt auf, d.h. durch den Zusatz von Salzen steigt die Löslichkeit in Wasser. Dieses Salz wird in die Monomerlösung gegeben. Im Fall der Gelpolymerisation kann es aber auch als wässrige Lösung auf das Gel gegeben werden.

Durch die Auswahl der Vernetzer kann ebenfalls die Kinetik der Quellung beeinflusst werden. Art und die Menge an Vernetzer sind zudem entscheidend für das Absorptionsverhalten des zeitverzögerten superabsorbierenden Polymers nach der vollständigen Hydrolyse/Neutralisation der kationischen Monomere. Wieder sollten und können die Quellkinetik und die Endabsorption an die jeweilige Anwendung angepasst werden. Hierbei spielen wieder sowohl die Anwendung als auch die Rohstoffe der Formulierung eine große Rolle.

Eine weitere mögliche Variante dieser Ausführungsform bildet das so genannte interpenetrierende Netzwerk: Dabei sind zwei Netzwerke ineinander verknüpft. Ein Netzwerk wird aus einem Polymer aus kationischen Monomeren, das zweite aus anionischen Monomeren gebildet. Die Ladung sollte sich in der Summe neutralisieren. Es kann sich als günstig erweisen, zusätzlich nicht-ionische Monomere mit in das Netzwerk einzubauen. Die Herstellung von interpenetrierenden Netzwerken erfolgt derart, das man in einer anionischen oder (kationischen) Monomerlösung ein kationisches (oder anionisches) Polymer vorlegt und dann polymerisiert. Dabei sollte die Vernetzung so gewählt werden, dass beide Polymere ein Netzwerk ausbilden: das vorgelegte und das neu gebildete.

### Variante c: Beschichtung mit einem entgegengesetzt geladenen Lösungspolymeren

In dieser dritten Verfahrensvariante c) wird die Zeitverzögerung durch eine spezielle Oberflächenbehandlung des superabsorbierenden Polymeren erreicht. Dabei wird das geladene superabsorbierende Polymer mit einem entgegengesetzt geladenen Polymer überzogen. Durch die Neutralisation der Ladungen an der Polymeroberfläche, wie es die vorliegende Erfindung als bevorzugt vorsieht, wird eine wasserundurchdringliche Symplex-Schicht gebildet, die eine Quellung des superabsorbierenden Polymeren in den ersten Minuten verhindert. Diese Oberflächenbehandlung soll sich mit der Zeit (mind. 10 bis 15 Minuten!) vom SAP ablösen, womit sich die Absorptionskapazität des superabsorbierenden Polymeren deutlich erhöhen.

Die Oberflächenbehandlung von anionischen superabsorbierenden Polymeren, vorzugsweise vernetzten, teilneutralsierten Polyacrylsäuren, mit kationischen Polymeren ist schon in einer Reihe von Patenten beschrieben: In den bereits zitierten Veröffentlichungen WO 2006/082188 und WO 2006/082189 ist die Oberflächenbehandlung mit ein bis zwei Prozent Polyamin beschrieben, in DE 10 2005 018922 wird PolyDADMAC (Polydiallyldimethylammoniumchlorid) auf superabsorbierende Polymere aufgebracht. Bei der Polyamin-Beschichtung sind vernetzende Komponenten anwesend. Dabei werden die kationischen Polymere als wässrige Lösungen auf das granulare superabsorbierende Polymer aufgesprüht. Die so erhaltenen superabsorbierenden Polymere weisen eine höhere Permeabilität und eine geringere Verklumpungstendenz bei der Lagerung auf, bleiben also länger rieselfähig. Da diese SAP ausschließlich für den Einsatz in Babywindeln entwickelt worden sind, dürfen sie natürlich keine Zeitverzögerung im Minutenbereich aufweisen. In EP 1 393 757 A1 ist die Oberflächenbeschichtung mit teilhydrolysiertem Polyvinylformamid beschrieben. Dies führt zu einer verbesserten Performance in der Windel. In WO 2003/43670 ist ebenfalls beschrieben, Polymere, die auf die Oberfläche aufgebracht worden sind, zu vernetzen.

Generell werden erfindungsgemäß kationische Polymere mit einem Molekulargewicht von 5 Mio g/mol oder weniger verwendet, die als 10 bis 20 %-ige wässrige Lösung eine versprühbare Lösung (Viskosität) ergeben. Diese werden als wässrige Lösung polymerisiert und zur Oberflächenbehandlung verwendet. Bei den gängigen Verfahren wird das superabsorbierende Polymer vorgelegt, z.B. in einem Wirbelbett, und mit einer Polymerlösung besprüht. Generell werden dabei "hochkationische" Polymere verwendet, also solche, deren kationische Monomere mindestens 75 Molprozent an der Zusammensetzung ausmachen.

Die vorliegende Erfindung bevorzugt die Verwendung von Hüll-Polymeren mit einem Molekulargewicht ≤ 3 Mio g/mol, vorzugsweise ≤ 2 Mio g/mol und besonders bevorzugt < 1,5 Mio g/mol, wobei die gewählten Hüll-Polymere entweder anionische oder kationische Eigenschaften aufweisen sollten. Ampholyte werden nicht verwendet.

Eine weitere Kombination kationischer und anionischer Polyelektrolyte sind MBIEsuperabsorbierende Polymere, wobei MBIE für "Mixed-Bed-lon-Exchange" steht. Solche Produkte sind u.a. in US 6,603,056 und den dort zitierten Patenten beschrieben: Es wird ein potentiell anionisches superabsorbierendes Polymer mit einem superabsorbierenden, kationischen Polymeren gemischt. "Potentiell anionisch" bedeutet, dass in den erfindungsgemäßen Ausführungen das anionische superabsorbierende Polymer in saurer Form verwendet wird. Während die rein anionischen superabsorbierenden Polymere meistens zu ca. 70 Prozent neutralisierte Polyacrylsäuren sind, verwendet man hier vernetze Polyacrylsäuren, die nicht oder nur wenig neutralisiert sind. Die Kombination mit einem kationischen Polymeren führt zu einem salzstabileren Produkt; die Salze werden sozusagen durch Ionenaustausch neutralisiert, wie in der folgenden Abbildung 2 dargestellt ist. Die neutralisierte Säure besitzt dann den entsprechenden osmotischen Druck (π) für eine starke Quellung.

Auch dieses Konzept für superabsorbierende Polymere wurde ausschließlich für die Anwendung in Hygieneartikeln, nämlich in Babywindeln entwickelt und zielt also wieder auf schnelle superabsorbierende Polymere ab. Die Kombination von anionischen und kationischen superabsorbierenden Polymer zur Darstellung eines im Minutenbereich zeitverzögerten superabsorbierenden Polymeren ist bislang nicht vorbeschrieben.

Als Ausgangsmaterial für die Oberflächenbehandlung gemäß vorliegender Erfindung kann jedes superabsorbierende Polymer verwendet werden, das vor allem in zementären Systemen eine ausreichende Aufnahmekapazität aufweist. Es kann sowohl anionisch als auch kationisch sein. Das Ausgangsmaterial soll im Folgenden "Kernpolymer" genannt werden. Das Polymer, das auf die Oberfläche aufgebracht wird, soll im Folgenden "Hüllpolymer" genannt werden. Bei den Kernpolymeren handelt es sich um anionische oder kationische superabsorbierende Polymere vorzugsweise im Sinne der Verfahrensvariante a), die insbesondere ≤ 10 Gew.-% an Comonomeren mit entgegengesetzter Ladung aufweisen. Im Unterschied zur Variante a) werden als Kernpolymere in der reinen Ausführungsform c) jedoch nur superabsorbierende Polymere verwendet, die ausschließlich aus hydrolysestabilen Vernetzern aufgebaut sind. Diese Variante wird als bevorzugt angesehen. Bis auf die Einschränkung bei den Vernetzern entspricht die Synthese der anionischen Kernpolymere derjenigen, die in der Verfahrensvariante a) beschrieben ist. Es können für den vorliegenden Fall auch alle dort bereits beschriebenen Monomere verwendet werden.

Für kationische Kernpolymere können alle Monomere mit einer permanenten kationischen Ladung verwendet werden. Permanent bedeutet wiederum, dass die kationische Ladung in alkalischem Milieu erhalten bleibt; ein Ester-quat ist somit ungeeignet. Bevorzugt sind: [3-(Acryloylamino)-propyl]-trimethylammoniumsalze und [3-(Methacryloylamino)-propyl]-trimethylammoniumsalze. Die genannten Salze liegen bevorzugt als Halogenide, Methosulfate oder Sulfate vor. Daneben kann Diallyldimethylammoniumchlorid verwendet werden.

Für die Behandlung der Oberfläche kommen zwei bevorzugte Verfahren in Frage, die beide auch in US 6,603,056 beschrieben sind:

Beim einen Verfahren handelt es sich im Grunde um eine klassische Pulverbeschichtung. Das Kernpolymer wird vorgelegt und z.B. in einem Wirbelbett, in Bewegung gebracht. Anschließend wird das entgegengesetzt geladene Hüllpolymer aufgebracht. Abschließend wird das Produkt getrocknet. Dieses Verfahren eignet sich vor allem dann, wenn relativ geringe Mengen an Hüllpolymer bezogen auf das Kernpolymer aufgebracht werden sollen. Bei größeren Mengen tritt bei diesem Verfahren ein Verkleben der Partikel auf und das Produkt backt zusammen. Dies führt dazu, dass die Oberflächen nicht mehr homogen belegt werden. Um große Mengen an Hüllpolymer aufzubringen, muss dieser Verfahrensschritt wiederholt durchgeführt werden.

Für größere Mengen an Hüllpolymer eignet sich ein zweites Verfahren: Dabei wird das Kernpolymer in einem organischen Lösemittel suspendiert. Zu der Suspension wird die Hüllpolymerlösung hinzugefügt, worauf sich aus elektrostatischen Gründen das Kernpolymer mit einer entgegengesetzt geladenen Hülle überzieht. Auch für sehr kleine Partikel ist dieses Verfahren von Vorteil, da diese in einem Wirbelbett schwer zu handhaben sind.

Nach dem Zusatz der Hüllpolymerlösung kann optional die durch die Lösung zugesetzte Wassermenge azeotrop abdestilliert werden. Daher sind als bevorzugt organische Lösemittel anzusehen, die ein Azeotrop mit möglichst hohem Wassergehalt bilden, in dem das superabsorbierende Polymer und das Hüllpolymer nicht löslich sind. Für dieses Verfahren können die gleichen Lösemittel verwendet werden, die auch in der Verfahrensvariante a) unter den Lösemitteln für die Suspensionspolymerisation genannt sind. Auch hat es sich als vorteilhaft erwiesen, ein Schutzkolloid zuzusetzen, wie dies auch bei der Suspensionspolymerisation geschieht. Dabei kann wieder aus den dort beschriebenen Schutzkolloiden ausgewählt werden.

Für die Oberflächenbeschichtung wird wie beschrieben ein Hüllpolymer auf das Kernpolymer aufgebracht. Dabei wird das Hüllpolymer bevorzugt als wässrige Lösung aufgebracht und insbesondere als versprühbare Lösung eingesetzt, wobei Lösungen mit einer Viskosität von 200 bis 7500 mPas besonders geeignet sind. Das Arbeiten mit organischen Lösemitteln ist bei diesem Verfahren sehr aufwändig, besonders in technischem Maßstab. Für beide eben beschriebenen Verfahren ist es günstig, mit niedrig viskosen Lösungen zu arbeiten, da sich diese besser versprühen lassen und auch besser auf die Oberfläche des suspendierten Kernpolymer aufziehen.

Da das Molekulargewicht des Hüllpolymeren die Viskosität wesentlich beeinflusst, sind Hüllpolymere mit einem Molekulargewicht von weniger als 5 Mio. g/mol bevorzugt. Außerdem ist es erfindungsgemäß vorgesehen, dass der weitere Polyelektrolyt, also das Hüllpolymer, einen Anteil an kationischem Monomer ≥ 75 Mol.-%, vorzugsweise ≥ 80 Mol-% und besonders bevorzugt zwischen 80 und 100 Mol-% aufweist.

Prinzipiell ist es möglich, solche kationischen oder anionischen Hüllpolymere sowohl nach dem Verfahren der Gelpolymerisation als auch der Suspensionspolymerisation herzustellen und die erhaltenen Polymere dann wieder aufzulösen und als wässrige Hüllpolymerisationslösung aufzubringen. Vorteilhafter ist es aber, die Polymerisation als Lösungspolymerisation durchzuführen, so dass das Produkt der Polymerisation unmittelbar verwendet werden kann und höchstens noch eine Verdünnung notwendig ist. Das Molekulargewicht der Hüllpolymere kann durch die Zugabe von Kettenreglern reduziert werden, wodurch die gewünschte Kettenlänge und damit auch die angestrebte Viskosität erhalten werden. Man verfährt dabei vorzugsweise wie folgt:
Die Monomere werden in Wasser gelöst oder ihre kommerziell erhältlichen wässrigen Lösungen verdünnt. Dann wird/werden der/die Kettenregler zugesetzt und der pH-Wert angepasst. Anschließend wird die wässrige Monomerlösung mit Stickstoff inertisiert und auf die Starttemperatur aufgeheizt. Mit der Zugabe der Initiatoren wird die Polymerisation gestartet und läuft in der Regel in wenigen Minuten ab. Die Konzentration des Hüllpolymeren wird möglichst hoch gewählt, damit die zu entfernende Wassermenge möglichst gering ist, die Viskosität aber noch gut in den erfindungsgemäßen Verfahren, wie Aufsprühen, Beschichten in Suspension, zu handhaben ist. Dabei kann es vorteilhaft sein, die Hüllpolymerlösung zu erwärmen, da bei höheren Temperaturen die Viskosität bei gleicher Konzentration sinkt. Geeignete Kettenregler sind Ameisensäure oder ihre Salze, z.B. Natriumformiat, Wasserstoffperoxid, Verbindungen, die eine Mercaptogruppe (R-SH) oder eine Mercaptatgruppe (R-S-M+) enthalten, wobei hier jeweils der Rest R ein organischer aliphatischer oder aromatischer Rest mit 1 bis 16 C-Atomen sein kann (z.B. Mercaptoethanol, 2-Mercaptoethylamin, 2-Mercaptoethylammoniumchlorid, Thioglykolsäure, Mercaptoethansulfonat (Natriumsalz), Cystein, Trismercaptotriazol (TMT) als Natriumsalz, 3-Mercaptotriazol, 2-Mercapto-1-methylimidazol), Verbindungen, die eine R-S-S-R'-Gruppe (Disulfitgruppe) enthalten, wobei hier die Reste R und R' unabhängig voneinander ein organischer aliphatischer oder aromatischer Rest mit 1 bis 16 C-Atomen sein können (z.B. Cystaminiumdichlorid, Cystein), phosphorhaltige Verbindungen, wie hypophosphorige Säure und deren Salze (z.B. Natriumhypophosphit) oder schwefelhaltige anorganische Salze wie Natriumsulfit.

Mögliche Hüllpolymere für anionische Kernpolymere sind kationische Polymere, die durch eine chemische Reaktion ihre kationische Ladung verlieren können. Mögliche kationische Monomere für diese Ausführungsform sind Ester-Quats, wie z. B. [2-(Acryloyloxy)-ethyl]-trimethylammoniumsalze, [2-(Methacryloyloxy)-ethyl]-trimethylammoniumsalze, Dimethylaminoethylmethacrylat mit Diethylsulfat oder Dimethylsulfat quaterniert, Diethylaminoethylacrylat mit Methylchlorid quaterniert. In diesem Fall ist die chemische Reaktion, die zur zeitverzögerten Quellung des SAP führt, eine Esterhydrolyse. Eine Neutralisationsreaktion des Hüllpolymeren ist mit den folgenden Polymeren möglich: Poly-3-dimethylamino-propylacrylamid, Poly-3-dimethylaminopropylmethacrylamid, Polyallylamin, Polyvinylamin, Polyethylenimin. Dabei werden alle Polymere als Salze eingesetzt. Für die Neutralisation der Aminofunktion können anorganische oder organische Säuren verwendet werden, wobei auch deren gemischte Salze geeignet sind. Alle genannten Varianten sind von der vorliegenden Erfindung mitumfasst.

Für die Einstellung der für die Anwendung passenden Kinetik der Ablösereaktion kann es notwendig sein, in das kationische Hüllpolymer weitere nicht-ionische Monomere einzubauen. Es können alle unter der Verfahrensvariante a) bereits genannten nicht-ionischen Monomere verwendet werden.

Diese erfindungsgemäße Variante c) beschränkt sich nicht nur auf Ein-Schicht-Hüllen. Um eine weitere bzw. gezieltere zeitliche Verzögerung zu erreichen, kann man nach der ersten Hüllschicht, die direkt auf das Kernpolymer aufgebracht worden ist, eine zweite mit der selben Ladung aufbringen, die auch das Kernpolymer ursprünglich besitzt. Dies lässt sich weiter fortsetzen, wobei die Ladung der Hüllpolymere alterniert. Auf ein anionisches Kernpolymer würde nach der ersten kationischen Hülle eine anionische zweite Hülle folgen. Die dritte Schale wäre dann wieder kationisch. Unabhängig von der Anzahl unterschiedlicher Hüllschichten können eine oder mehrere Hüllschicht(en) vernetzt sein. Außerdem sollte vorzugsweise mindestens eine Hüllschicht mit Hilfe einer wässrigen Lösung vernetzt worden sein.

Außerdem berücksichtigt die vorliegende Erfindung die Möglichkeit, dass das Hüllpolymer in der Verfahrensvariante c) pro aufgebrachter Schicht in einer Menge von 5 bis 100 Gew.-%, vorzugsweise von 10 bis 80 Gew.-% und besonders bevorzugt in einer Menge von 25 bis 75 Gew.-%, jeweils bezogen auf das Kernpolymer, eingesetzt wurde.
Eine weitere Variation der Erfindung betrifft die Vernetzung des Hüllpolymeren und die Steuerung seiner Ablösegeschwindigkeit. Dazu können z.B. freie Aminogruppen der Hüllpolymere verwendet werden. Der Vernetzer wird zeitlich nach dem Hüllpolymer zugegeben, bevorzugt als wässrige Lösung. Um eine vollständige Reaktion des Vernetzers sicher zu stellen, kann es notwendig sein, das zeitverzögert superabsorbierende Polymer nach dem Trocknen noch einmal zu erhitzen, bzw. die Trocknung bei erhöhter Temperatur durchzuführen. Mögliche Vernetzer für diese Form der Durchführung sind Diepoxide wie Diethylenglykoldiglycidylether oder Polyethylenglykoldiglycidylether, Diisocyanate (wobei letztere nach dem Trocknen wasserfrei aufgebracht werden müssen), Glyoxal, Glyoxylsäure, Formaldehyd, Formaldehyd-Bildner und geeignete Mischungen.

Um die Kinetik des Ablösevorganges zu steuern, ist die Zusammensetzung des Hüllpolymeren auf das Kernpolymer anzupassen. Dies kann z.B. **dadurch geschehen, dass** die passende Zusammensetzung ermittelt wird. Dabei hat es sich als günstig erwiesen, im Kern- und im Hüllpolymer die identischen Molverhältnisse einzustellen; die Ladungen müssen aber unterschiedlich sein. Je nach Anwendung können sich aber auch Abweichungen von den Molverhältnissen als positiv erweisen.

Ebenfalls muss die optimale Menge an Hüllpolymer bestimmt werden. Generell lässt sich sagen, dass fein strukturierte Kernpolymere größere Mengen an Hüllpolymer benötigen, da sie eine größere Oberfläche besitzen. Auch das Molekulargewicht der Hüllpolymere kann eine Rolle spielen, da sich kurzkettige Hüllpolymer besser ablösen.
Das Verfahren der Oberflächenbeschichtung c) benötigt mehr Verfahrensschritte als die beiden alternativen Schritte a) und b). Prinzipiell ist es auch denkbar, die Kernpolymersynthese als inverse Suspensionspolymerisation durchzuführen und nach der Trocknung durch azeotrope Destillation eine neue Monomerlösung zuzuführen, die derjenigen des Hüllpolymeren entspricht. Würde diese an der Oberfläche polymerisiert, würde die Verfahrensvariante c) auf eine Ein-Topf-Reaktion reduziert. Die Verweilzeit im Reaktor wäre allerdings recht lange und es ist nicht einfach, eine homogene Schicht des Hüllpolymeren allein an der Oberfläche aufzubauen.

Variante d: Kombination eines hydrolysestabilen mit einem hydrolyselabilen Monomer in Gegenwart eines Vernetzers

Die weitere Verfahrensvariante d) der Erfindung betrifft ein SAP, das nach der Polymerisation aus mindestens zwei nicht-ionischen Comonomeren zusammengesetzt ist, aber maximal 5 Mol-% anionische oder kationische Ladung enthält. Unter diesen nicht-ionischen Comonomeren ist mindestens eines, das durch eine chemische Reaktion, bevorzugt eine Hydrolyse, in ein ionisches Monomer umgewandelt werden kann. Der Rest besteht aus permanent nicht-ionischen Monomeren, die auch bei längerer Behandlung des SAP bei hohem pH-Wert keiner nennenswerten Hydrolyse unterliegen. Durch dieses dann ionische Monomer entsteht ein osmotischer Druck, der zur stärkeren Quellung des SAP führt. Als Beispiel sei ein SAP angeführt, das aus Acrylamid und Hydropropylacrylat (HPA) sowie einem Vernetzer besteht. Wird dieses SAP einem alkalischen Milieu ausgesetzt, tritt eine Esterhydrolyse des HPA ein, die zu Acrylateinheiten führt. Dadurch entsteht ein zusätzlicher osmotischer Druck und das SAP quillt weiter auf. Bei dieser Ausführungsform ist zu beachten, dass auch rein nicht-ionische SAP eine gewisse "natürliche" Quellung aufweisen (Entropieeffekt, vergleichbar einem EPDM-Kautschuk in Benzin); daher liegt hier eine Quellung null im Anfangsstadium nicht vor.

Die Polymerisation wird wie bei der Ausführungsform a) bereits beschrieben durchgeführt.

Geeignete hydrolysestabile Monomere sind bevorzugt permanent nicht-ionische Monomere, die vorzugsweise ausgewählt werden aus der Reihe der wasserlöslichen Acrylamid-Derivate, vorzugsweise alkylsubstituierte Acrylamide oder aminoalkylsubstituierte Derivate des Acrylamids oder des Methacrylamids und besonders bevorzugt Acrylamid, Methacrylamid, N-Methylacrylamid, N-Methylmethacrylamid, N,N-Dimethylacrylamid, N-Ethylacrylamid, N,N-Diethylacrylamid, N-Cyclohexylacrylamid, N-Benzylacrylamid, N,N-Dimethylaminopropylacrylamid, N,N-Dimethylaminoethylacrylamid, N-tertiär Butylacrylamid, N-Vinylformamid, N-Vinylacetamid, Acrylnitril, Methacrylnitril, oder beliebige Mischungen daraus.

Geeignete hydrolysierbare Monomere werden ausgewählt aus nicht-ionischen Monomeren wie z. B. wasserlöslichen oder wasserdispergierbaren Ester der Acrylsäure oder Methacrylsäure, wie Hydroxylethyl(meth)acrylat, Hydroxypropyl(meth)acrylat (als techn. Produkt ein Isomerengemisch), Estern der Acrylsäure und Methacrylsäure, die als Seitenkette Polyethylenglykol, Polypropylenglykol oder Copolymere aus Ethylenglykol und Propylenglykol besitzen, Ethyl(meth)acrylat, Methyl(meth)acrylat, 2-Ethylhexylacrylat.

Daneben können Aminoester der Acryl- oder Methacrylsäure verwendet werden, da auch diese in zementären Systemen (hoher pH) sehr schnell deprotoniert werden und damit neutral vorliegen. Mögliche Monomere dieser Art sind Dimethylaminoethyl(meth)acrylat, tert. Butylaminoethylmethacrylat oder Diethylaminoethylacrylat. Als Vernetzer kommen insbesondere alle bereits im Zusammenhang mit der Verfahrensvariante a) genannten hydrolysestabilen und hydrolyselabilen Vertreter in Frage, die in den dort jeweils genannten Anteilen auch in diesem Fall a) eingesetzt werden. Als reine Ausführungsform soll bei der Variante d) verstanden werden, dass ausschließlich hydrolysestabile Vernetzer verwendet werden.

### Gemischte Ausführungsformen:

Schließlich berücksichtigt die Erfindung beliebige Kombinationen der vier Verfahrensvarianten a), b), c) und d): In vielen Fällen ist es sinnvoll, die verschiedenen Varianten zu kombinieren (a+b+c+d; a+b+c; a+b+d; b+c+d; a+c+d; a+b; a+c; a+d; b+d; c+d). Dazu bietet sich vor allem der Schritt der Gelpolymerisation oder inversen Suspensionspolymerisation an. Ein weiterer Aspekt der vorliegenden Erfindung ist deshalb in einem SAP zu sehen, welches mit Hilfe mindestens zweier Verfahrensvarianten a), b), c) und d) und vorzugsweise unter Anwendung einer Gelpolymerisation und/oder einer inversen Suspensionspolymerisation hergestellt wurde. In eine Monomerlösung aus einem anionischen und einem kationischen, hydrolysierbaren Monomer kann leicht neben dem hydrolysestabilen Vernetzer noch ein hydrolyselabiler Vernetzer eingebracht werden. Verwendet man ein solches Polymer als Kernpolymer für die Oberflächenbeschichtung, so sind die drei Varianten a), b) und c) bei der Herstellung des erfindungsgemäßen SAP verwirklicht.

Unter allen Ausführungsformen sind die Varianten a), b) und c), bzw. die Kombination der Varianten a), b) und d) bevorzugt, da sie mit nur einem Verfahrensschritt auskommen (Gelpolymerisation oder Inverse Suspensionspolymerisation), während Ausführungsformen, die die sich der Variante c) bedienen drei Verfahrenschritte benötigen (Synthese des Kernpolymer, Synthese des Hüllpolymer, Oberflächenbeschichtung) oder zu längeren Verweilzeiten im Reaktor führen.

Mit allen beschriebenen Verfahrensvarianten lassen sich superabsorbierende Polymere mit anionischen und/oder kationischen Eigenschaften und einer zeitlich verzögerten Quellungswirkung herstellen, die definierte Teilchengrößen aufweisen. Da im Rahmen der vorliegenden Erfindung die SAP in unterschiedliche Poren und Klüfte der unterirdischen Formationen eingebracht werden, wäre es unvorteilhaft, nur SAP mit einer spezifischen Teilchengröße erfindungsgemäß einzusetzen. Die vorliegende Erfindung umfasst deshalb auch eine weitere Verfahrensvariante, bei der das SAP eine Teilchengröße von 0,5 bis 1.000 µm, bevorzugt von 1,0 bis 200 µm und besonders bevorzugt von 10 bis 100 µm aufweist. Die genannten Teilchengrößen können beliebig untereinander variiert und kombiniert werden.
Ein Hauptaspekt betrifft die bereits ausführlich beschriebene zeitverzögerte Quellung der erfindungsgemäßen SAP. Die vorliegende Erfindung berücksichtigt in diesem Zusammenhang eine spezielle Verfahrensvariante, bei der 30 Min. nach Bereitung der bauchemischen Mischung unter Berücksichtung der erfindungsgemäßen SAP maximal 70%, vorzugsweise maximal 60% und besonders bevorzugt maximal 50% der maximalen Absorptionskapazität des superabsorbierenden Polymers erreicht sind. Diese maximale Absorptionskapazität wird im Rahmen der vorliegenden Erfindung in einer wässrigen Salzlösung bestimmt, die pro Liter Wasser 4,0 g Natriumhydroxid oder 56,0 g Natriumchlorid enthält.

Insgesamt ist zusammenfassend festzustellen, dass der Hauptgegenstand der vorliegenden Erfindung im speziellen Einsatz superabsorbierender Polymere besteht, welche durch spezielle Herstellungsverfahren und deren Kombinationen definiert sind und welche sich insbesondere durch eine zeitverzögerte Quellungswirkung mit einem Quellungsbeginn nach frühestens 5 Minuten auszeichnen. Dabei unterscheidet sich das Quellverhalten von den bisher bekannten superabsorbierenden Polymeren hauptsächlich dadurch, dass die Flüssigkeitsaufnahme durch die spezielle Struktur des SAP mit zeitlicher Verzögerung im Minutenbereich auftritt. Dem gegenüber stehen die bisher bekannten Anwendungen im Hygienebereich, wo ein spezieller Wert darauf gelegt wird, dass (Körper-)Flüssigkeiten in möglichst kurzer Zeit vollständig vom Polymer absorbiert werden. Durch die verzögerte Quellungs- bzw. Absorptionswirkung der erfindungsgemäßen superabsorbierenden Polymere kann nun die Blockierung von permeablen Formationen bei der Exploration und Ausbeuten von unterirdischen Erdölund/oder Erdgaslagerstätten zeitlich gesteuert werden und auch die Menge an benötigtem Flutmedium kann auf den jeweiligen spezifischen Anwendungsfall abgestimmt werden.
Die nachfolgenden Beispiele verdeutlichen die Vorteile der vorliegenden Erfindung ohne diese darauf zu beschränken.

### Beispiele

### Abkürzungen:

| | |
|---|---|
| MADAMEQUAT | = [2-(Methacryloyloxy)-ethyl]-trimethylammoniumchlorid |
| TEPA | = Tetraethylenpentamin |
| DIMAPAQUAT | = [3-(Acryloylamino)-propyl]-trimethylammoniumchlorid |
| DEGDA | = Diethylenglykoldiacrylat |

Es wurden Polymere mit folgender Zusammensetzung synthetisiert:

### Polymer 1 (Beschichtung eines anionischen superabsorbierenden Polymeren mit einem kationischen Hüllpolymer)

In einem 2L-Doppelwandreaktor wurden 1000 g Cyclohexan vorgelegt. Nach der Zugabe von 6 g Span 60 Schutzkolloid wurden 100 g fein vermahlenes Acrylamid/Acrylsäure-Copolymer (Luquasorb AF 2 der BASF SE) zugegeben und suspendiert. Nach dem Aufheizen auf 70°C wurden langsam 250 g einer 10%igen Hüllpolymerlösung, welches ein 1:1-Copolymer von Acrylamid und MADAMEQUAT ist, zugetropft und die Temperatur so weit erhöht, dass das zugegebene Wasser durch azeotrope Destillation entfernt werden konnte. Nachdem die Azeotroptemperatur 72°C erreicht hatte, wurde unter die Siedetemperatur abgekühlt. Nach der langsamen Zugabe von weiteren 250 g Hüllpolymerlösung wurde wieder bis zu Sieden erhitzt und so lange Wasser ausgekreist, bis die Azeotroptemperatur bei 75°C lag. Nach dem Abkühlen wurde abfiltriert und mit wenig Ethanol nachgewaschen.

### Das Hüllpolymer wurde folgendermaßen hergestellt:

In einem 10L-Doppelwandreaktor wurden 1,6 kg Wasser vorgelegt. Dann wurden 200,4 g Acrylamid (50%ige Lösung in Wasser) und 133,4 g MADAMEQUAT zugegeben und mit 20%iger NaOH ein pH Wert von 5 eingestellt. Anschließend wurden 38 g Wasser zugegeben und die Lösung 30 min mit N₂ gespült. Während dem Spülen wurde die Reaktionsmischung auf 60°C aufgeheizt. Die Polymerisation wird durch Zusatz von 380 ppm TEPA und 2000 ppm Natriumperoxodisulfat gestartet. Der Ansatz wurde 2 h bei 60°C polymerisiert, abgekühlt und abgefüllt.

### Polymer 2

In einem 2L-Dreihalskolben mit Rührer und Thermometer wurden 99 g Wasser vorgelegt und anschließend nacheinander 186,1 g Na-AMPS (50%ige wässrige Lösung), 140,2 g DIMAPAQUAT, 216,9 g Acrylamid (50%ige wässrige Lösung), 13,8 g DEGDA und 14,3 g Methylenbisacrylamid (2% ig) zugegeben. Nach der Zugabe von weiteren 89 g Wasser, dem Einstellen auf pH 5 mit 20%iger H₂SO₄ und 30 min Spülen mit N₂ wurde auf 10°C abgekühlt.
Dann wurde die Lösung in einen Plastikbehälter mit den Maßen (b*t*h) 15 cm * 10 cm * 20 cm umgefüllt und anschließend werden nacheinander 200 ppm 2,2'-Azo-bis-(2-amidinopropan)-dihydrochlorid, 250 ppm Natriumperoxodisulfat, 8 ppm Natriumbisulfit, 20 ppm tert-Butylhydroperoxid und 3 ppm Eisen(II)-sulfat-heptahydrat zudosiert. Die Polymerisation wurde durch Bestrahlen mit UV-Licht (Cleo Performance 40 W) gestartet.
Nach ca. 2 h wurde das erhaltene Gel aus dem Plastikbehälter genommen und mit einer Schere in Würfel einer Kantenlänge von ca. 5 cm geschnitten. Bevor die Gelwürfel mittels eines herkömmlichen Fleischwolfs zerkleinert wurden, wurden sie mit dem Trennmittel Kokosfettsäurediethanolamid bestrichen.
Das erhaltene Gelgranulat wurde gleichmäßig auf Trockengitter verteilt und in einem Umlufttrockenschrankbei ca. 120°C bis zur Gewichtskonstanz (ca. 3 h ) getrocknet.
Es wurden ca. 300 g eines weißen, harten Granulats erhalten, welches mit Hilfe einer Zentrifugalmühle in einen pulverförmigen Zustand überführt wurde. Der mittlere Teilchendurchmesser des Polymerpulvers betrug 30 bis 50 µm und der Anteil an Partikeln, die ein Sieb der Maschengröße 63 µm nicht passieren, war kleiner als 2 %.

Von diesen Polymeren wurde das zeitabhängige Quellverhalten in einem synthetisch hergestellten, hochsalinen Lagerstättenwasser aus der Norddeutschen Tiefebene evaluiert. Die Ergebnisse sind in folgender Tabelle zusammengefasst:

| | Wasseraufnahme nach 1 h [g Wasser / g Polymer] | Wasseraufnahme nach 6 h [g Wasser / g Polymer] | Wasseraufnahme nach 24 h [g Wasser / g Polymer] | Wasseraufnahme nach 48 h [g Wasser / g Polymer] |
|---|---|---|---|---|
| Polymer 1 | 2,2 | 2,4 | 2,5 | 18,7 |
| Polymer 2 | 7,0 | 9,4 | 11,0 | 13,5 |

Wie an den Beispielen zu erkennen ist, lässt sich durch den entsprechenden Aufbau der Superabsorber der Beginn der Wasseraufnahme bzw. des Quellens steuern. So setzt bspw. bei Polymer 1 die Quellung erst relativ spät ein, während Polymer 2 bereits nach 1 h etwa die Hälfte seiner Wasseraufnahmekapazität erreicht hat.

## Patentansprüche

1. Verfahren zur Blockierung unterirdischer Formationen bei der Förderung von fossilem Öl und/oder Gas, wobei bei einem ersten Schritt in flüssigkeitsführende und poröse Gesteinsformationen wasserabsorbierende Partikel eingebracht werden, bei denen es sich um wasserquellbare, vernetzte und wasserunlösliche Polymere handelt, und wobei schließlich die Partikel in der wasserführenden Gesteinsformation durch Wasserabsorption den Flüssigkeitsfluss durch die Gesteinsschichten unterbinden, **dadurch gekennzeichnet, dass** es sich bei den absorbierenden Partikeln um ein superabsorbierendes Polymer (SAP) mit anionischen und/oder kationischen Eigenschaften und einer zeitlich verzögerten Quellungswirkung handelt.

2. Verfahren nach Anspruch 1, **dadurch gekennzeichnet, dass** das SAP durch Polymerisation ethylenisch ungesättigter Vinylverbindungen hergestellt wurde.

3. Verfahren nach einem der Ansprüche 1 oder 2, **dadurch gekennzeichnet, dass** es in salzhaltigen Formationswässern durchgeführt wird.

4. Verfahren nach einem der Ansprüche 1 bis 3, **dadurch gekennzeichnet, dass** die Quellung des SAP frühestens nach 5 Minuten beginnt und es hergestellt wurde mit Hilfe mindestens einer Verfahrensvariante ausgewählt aus der Reihe
a) Polymerisation der Monomer-Komponenten in Gegenwart einer Kombination bestehend aus mindestens einem hydrolysestabilen und mindestens einem hydrolyselabilen Vernetzer;
b) Polymerisation von mindestens einem permanent anionischen Monomer und mindestens einem hydrolysierbaren kationischen Monomer;
c) Beschichtung einer Kernpolymer-Komponente mit mindestens einem weiteren Polyelektrolyten als Hüllpolymer;
d) Polymerisation von mindestens einem hydrolysestabilen Monomer mit mindestens einem hydrolyselabilen Monomer in Gegenwart mindestens eines Vernetzers.

5. Verfahren nach Anspruch 4, **dadurch gekennzeichnet, dass** die MonomerBausteine des SAP als freie Säuren, als Salz oder in einer Mischform daraus eingesetzt worden sind.

6. Verfahren nach einem der Ansprüche 4 oder 5, **dadurch gekennzeichnet, dass** die Säureanteile des SAP nach der Polymerisation neutralisiert worden sind, vorzugsweise mit Hilfe von Natrium-, Kalium-, Calcium-, Magnesium-Hydroxyd, Natrium-, Kalium-, Calcium-, Magnesium-Carbonat, Ammoniak, einem primären, sekundären oder tertiären C₁₋₂₀-Alkylamin, C₁₋₂₀-Alkanolamin, C₅₋₈-Cycloalkylamin und/oder C₆₋₁₄-Arylamin, wobei die Amine verzweigte und/oder unverzweigte Alkylgruppen aufweisen können, oder Mischungen daraus.

7. Verfahren nach einem der Ansprüche 4 bis 6, **dadurch gekennzeichnet, dass** die Polymerisation in den Verfahrensvarianten a) und/oder b) als radikalische Substanz-, Lösungs-, Gel-, Emulsions-, Dispersions- oder Suspensions-Polymerisation und insbesondere als Gelpolymerisation durchgeführt worden ist.

8. Verfahren nach einem der Ansprüche 4 bis 7, **dadurch gekennzeichnet, dass** die Polymerisation unter adiabatischen Bedingungen durchgeführt worden ist, wobei die Reaktion vorzugsweise mit einem Redox-Starter und/oder einem Photoinitiator gestartet worden ist.

9. Verfahren nach einem der Ansprüche 4 bis 8, **dadurch gekennzeichnet, dass** die Polymerisation bei Temperaturen zwischen -20° und +60°C, vorzugsweise -10° und +50°C und besonders bevorzugt zwischen 0° und 40°C gestartet worden ist.

10. Verfahren nach einem der Ansprüche 4 bis 9, **dadurch gekennzeichnet, dass** die Polymerisation unter Atmosphärendruck und vorzugsweise ohne Wärmezufuhr durchgeführt worden ist.

11. Verfahren nach einem der Ansprüche 4 bis 10, **dadurch gekennzeichnet, dass** die Polymerisation in Gegenwart mindestens eines nicht mit Wasser mischbaren Lösemittels, insbesondere eines organischen Lösemittels ausgewählt aus der Reihe der linearen aliphatischen Kohlenwasserstoffe, vorzugsweise n-Pentan, n-Hexan, n-Heptan, oder der verzweigten aliphatischen Kohlenwasserstoffe (Isoparaffine), oder der cycloaliphatischen Kohlenwasserstoffe, vorzugsweise Cyclohexan und Decalin, oder der aromatischen Kohlenwasserstoffe, vorzugsweise Benzol, Toluol und Xylol, oder Alkohole, Ketone, Carbonsäureester, Nitroverbindungen, halogenhaltige Kohlenwasserstoffe, Ether, oder Mischungen daraus, und besonders bevorzugt einem organischen Lösemittel, das mit Wasser azeotrope Gemische bildet, durchgeführt worden ist.

12. Verfahren nach einem der Ansprüche 1 bis 11, **dadurch gekennzeichnet, dass** das verwendete SAP als ethylenisch ungesättigte Vinylverbindung mindestens einen Vertreter ausgewählt aus der Reihe der ethylenisch ungesättigten, wasserlöslichen Carboxylsäuren und ethylenisch ungesättigten Sulfonsäuremonomere sowie deren Salze und Derivate enthält und vorzugsweise Acrylsäure, Methacrylsäure, Ethacrylsäure, α-Chloroacrylsäure, α-Cyanoacrylsäure, β-Methylacrylsäure (Crotonsäure), α-Phenylacrylsäure, β-Acryloxypropionsäure, Sorbinsäure, α-Chlorsorbinsäure, 2'-Methylisocrotonsäure, Zimtsäure, p-Chlorzimtsäure, β-Stearylsäure, Itaconsäure, Citraconsäure, Mesacronsäure, Glutaconsäure, Aconitsäure, Maleinsäure, Fumarsäure, Tricarboxyethylen, Maleinsäureanhydrid oder beliebige Mischungen daraus.

13. Verfahren nach Anspruch 12, **dadurch gekennzeichnet, dass** das verwendete SAP als Aryl- oder Methacrylsulfonsäure mindestens einen Vertreter der Reihe Sulfoethylacrylat, Sulfoethylmethacrylat, Sulfopropylacrylat, Sulfopropylmethacrylat, 2-Hydroxy-3-methacryloxypropylsulfonsäure und 2-Acrylamido-2-methylpropansulfonsäure (AMPS) enthält.

14. Verfahren nach einem der Ansprüche 4 bis 13, **dadurch gekennzeichnet, dass** das verwendete SAP als nicht ionisches Monomer mindestens einen Vertreter der Reihe (Meth)acrylamid und der wasserlöslichen (Meth)acrylamid-derivate, vorzugsweise alkylsubstituierte Acrylamide oder aminoalkylsubstituierte Derivate des Acrylamids oder des Methacrylamids und besonders bevorzugt Acrylamid, Methacrylamid, N-Methylacrylamid, N-Methylmethacrylamid, N,N-Dimethylacrylamid, N-Ethylacrylamid, N,N-Diethylacrylamid, N-Cyclohexylacrylamid, N-Benzylacrylamid, N,N-Dimethylaminopropylacrylamid, N,N-Dimethylaminoethylacrylamid, N-tertiär Butylacrylamid, sowie N-Vinylformamid, N-Vinylacetamid, Acrylnitril, Methacrylnitril, oder beliebige Mischungen daraus enthält.

15. Verfahren nach einem der Ansprüche 4 bis 14, **dadurch gekennzeichnet, dass** in der Verfahrensvariante a) als hydrolysestabiler Vernetzer mindestens ein Vertreter der Reihe N,N'-Methylenbisacrylamid, N,N'Methylenbismethacrylamid oder Monomere mit mindestens einer Maleinimidgruppe, vorzugsweise Hexamethylenbismaleinimid, Monomere mit mehr als einer Vinylethergruppe, vorzugsweise Ethylenglykoldivinylether, Triethylenglykoldivinylether, Cyclohexandioldivinylether, Allylamino- oder Allylammoniumverbindungen mit mehr als einer Allylgruppe, vorzugsweise Triallylamin oder ein Tetraallylammoniumsalz wie Tetraallylammoniumchlorid, oder Allylether mit mehr als einer Allylgruppe, wie Tetraallyloxyethan und Pentaerythrittriallylether, oder Monomere mit vinylaromatischen Gruppen, vorzugsweise Divinylbenzol und Triallylisocyanurat, oder Diamine, Triamine, Tetramine oder höherwertige Amine, vorzugsweise Ethylendiamin und Diethylentriamin eingesetzt wurden.

16. Verfahren nach einem der Ansprüche 4 bis 15, **dadurch gekennzeichnet, dass** als hydrolyselabiler Vernetzer mindestens ein Vertreter der Reihe der Di-, Tri- oder Tetra(meth)acrylate, wie 1,4-Butandioldiacrylat, 1,4-Butandioldimethacrylat, 1,3-Butylenglykoldiacrylat, 1,3-Butylenglykoldimethacrylat, Diethylenglykoldiacrylat, Diethylenglykoldimethacrylat, Ethylenglykoldimethacrylat ethoxyliertes Bisphenol-A-diacrylat, ethoxyliertes Bisphenol-A-dimethacrylat, Ethylenglykoldimethacrylat, 1,6-Hexandioldiacrylat, 1,6-Hexandioldimethacrylat, Neopentylglykoldimethacrylat, Polyethylenglykoldiacrylat, Polyethylenglykoldimethacrylat, Triethylenglykoldiacrylat, Triethylenglykoldimethacrylat, Tripropylenglykoldiacrylat, Tetraethylenglykoldiacrylat, Tetraethylenglykoldimethacrylat, Dipentaerythritpentaacrylat, Pentaerythrittetraacrylat, Pentaerythrittriacrylat, Trimethylolpropantriacrylat, Trimethylolpropantrimethacrylat, Cyclopentadiendiacrylat, Tris(2-hydroxyethyl)isocyanurattriacrylat und/oder Tris(2-hydroxy)isocyanurattrimethacrylat, der mehr als eine Vinylester-, bzw. Allylestergruppe mit entsprechenden Carbonsäuren aufweisenden Monomere wie Divinylester von Polycarbonsäuren, Diallylester von Polycarbonsäuren, Triallylterephthalat, Diallylmaleat, Diallylfumarat, Trivinyltrimellitat, Divinyladipat und/oder Diallylsuccinat eingesetzt wurde, oder mindestens ein Vertreter der Verbindungen mit mindestens einer vinylischen oder allylischen Doppelbindung und mindestens einer Epoxygruppe wie Glycidylacrylat, Allylglycidether oder der Verbindungen mit mehr als einer Epoxygruppe wie Ethylenglykoldiglycidether, Diethylenglykoldiglycidether, Polyethylenglykoldiglydidether, Polypropylenglykoldiglycidether oder der Verbindungen mit mindestens einer vinylischen oder allylischen Doppelbindung und mindestens einer (Meth)acrylatgruppe wie Polyethylenglykolmonoallyletheracrylat oder Polyethylenglykolmonoallylether-methacrylat.

17. Verfahren nach einem der Ansprüche 4 bis 16, **dadurch gekennzeichnet, dass** in der Verfahrensvariante a) der hydrolysestabile Vernetzer in Mengen von 0,01 bis 1,0 Mol.-%, vorzugsweise von 0,03 bis 0,7 Mol.-% und besonders bevorzugt von 0,05 bis 0,5 Mol.-% eingesetzt wurde.

18. Verfahren nach einem der Ansprüche 4 bis 17, **dadurch gekennzeichnet, dass** in der Verfahrensvariante a) der hydrolyselabile Vernetzer in Mengen von 0,1 bis 10,0 Mol.-%, vorzugsweise von 0,3 bis 7,0 Mol.-% und besonders bevorzugt von 0,5 bis 5,0 Mol.-% eingesetzt wurde.

19. Verfahren nach einem der Ansprüche 4 bis 18, **dadurch gekennzeichnet, dass** in der Verfahrensvariante b) als anionisches Monomer mindestens ein Vertreter aus der Reihe der ethylenisch ungesättigten wasserlöslichen Carboxylsäuren und ethylenisch ungesättigten Sulfonsäuremonomere sowie deren Salze und Derivate eingesetzt wurde, insbesondere Acrylsäure, Methacrylsäure, Ethacrylsäure, α-Chloracrylsäure, α-Cyanoacrylsäure, β-Methylacrylsäure (Crotonsäure), α-Phenylacrylsäure, β-Acryloxypropionsäure, Sorbinsäure, α-Chlorsorbinsäure, 2'-Methylisocrotonsäure, Zimtsäure, p-Chlorzimtsäure, β-Stearylsäure, Itaconsäure, Citraconsäure, Mesacronsäure, Glutaconsäure, Aconitsäure, Maleinsäure, Fumarsäure, Tricarboxyethylen und Maleinsäureanhydrid, besonders bevorzugt Acrylsäure, Methacrylsäure, aliphatische oder aromatische Vinylsulfonsäuren und insbesondere bevorzugt Vinylsulfonsäure, Allylsulfonsäure, Vinyltoluolsulfonsäure, Styrolsulfonsäure, Acryl- und Methacrylsulfonsäuren und noch mehr bevorzugt Sulfoethylacrylat, Sulfoethylmethacrylat, Sulfopropylacrylat, Sulfopropylmethacrylat, 2-Hydroxy-3-methacryloxypropylsulfonsäure und 2-Acrylamido-2-methylpropansulfonsäure (AMPS), oder deren Mischungen eingesetzt wurde.

20. Verfahren nach einem der Ansprüche 4 bis 19, **dadurch gekennzeichnet, dass** in der Verfahrensvariante b) als kationisches Monomer mindestens ein Vertreter der Reihe der polymerisierbaren kationischen Ester von Vinylverbindungen, deren kationische Ladung durch Hydrolyse abgespalten werden kann, vorzugsweise [2-(Acryloyloxy)-ethyl]-trimethylammoniumsalze und [2-(Methacryloyloxy)-ethyl]-methylammoniumsalze, oder Monomere, die vinylisch polymerisierbar sind und eine Aminofunktion tragen, die protoniert werden kann, vorzugsweise Salze von 3-Dimethylaminopropylacrylamid oder 3-Dimethylaminopropylmethacrylamid und besonders bevorzugt deren Hydrochlorid und Hydrosulfat, oder Mischungen daraus eingesetzt wurde.

21. Verfahren nach einem der Ansprüche 4 bis 20, **dadurch gekennzeichnet, dass** in der Verfahrensvariante b) ein molares Verhältnis von anionischem zu kationischem Monomer 0,3 bis 2,0:1,0, vorzugsweise von 0,5 bis 1,5:1,0 und besonders bevorzugt von 0,7 bis 1,3:1,0 vorlag.

22. Verfahren nach einem der Ansprüche 4 bis 21, **dadurch gekennzeichnet, dass** durch die Verfahrensvariante c) Ladungen auf der Polymeroberfläche neutralisiert wurden.

23. Verfahren nach einem der Ansprüche 4 bis 22, **dadurch gekennzeichnet, dass** in der Verfahrensvariante c) Hüll-Polymere mit einem Molekulargewicht ≤ 5 Mio g/mol, insbesondere ≤ 3 Mio g/mol, vorzugsweise ≤ 2 Mio g/mol und besonders bevorzugt < 1,5 Mio g/mol eingesetzt wurden, insbesondere mit anionischen oder kationischen Eigenschaften.

24. Verfahren nach einem der Ansprüche 4 bis 23, **dadurch gekennzeichnet, dass** in der Verfahrensvariante c) der weitere Polyelektrolyt (Hüllpolymer) als wässrige Lösung, vorzugsweise als versprühbare Lösung eingesetzt wurde, und insbesondere als Lösung mit einer Viskosität von 200 bis 7500 mPas.

25. Verfahren nach einem der Ansprüche 4 bis 24, **dadurch gekennzeichnet, dass** in der Verfahrensvariante c) der weitere Polyelektrolyt einen Anteil an kationischem Monomer ≥ 75 Mol.-%, vorzugsweise ≥ 80 Mol.-% und besonders bevorzugt zwischen 80 und 100 Mol.-% aufwies.

26. Verfahren nach einem der Ansprüche 4 bis 25, **dadurch gekennzeichnet, dass** in der Verfahrensvariante c) das Kernpolymer einen Anteil ≤10 Gew.-% an Comonomeren mit entgegengesetzter Ladung aufgewiesen hat.

27. Verfahren nach einem der Ansprüche 4 bis 26, **dadurch gekennzeichnet, dass** in der Verfahrensvariante c) ein Kernpolymer eingesetzt wurde, welches als Vernetzer ausschließlich hydrolysestabile Vernetzer enthielt.

28. Verfahren nach einem der Ansprüche 4 bis 27, **dadurch gekennzeichnet, dass** in der Verfahrensvariante c) ein kationisches Kernpolymer eingesetzt wurde, welches vorzugsweise eine permanente kationische Ladung aufweist, vorzugsweise ein [3-(Acryloylamino)-propyl]-trimethylammoniumsalz und [3-(Methacryloylamino)-propyl]-trimethylammoniumsalz und besonders bevorzugt Salze vom Halogenid- oder Methosulfat-Typ, sowie Diallyldimethylammoniumchlorid, oder deren Mischung.

29. Verfahren nach einem der Ansprüche 4 bis 28, **dadurch gekennzeichnet, dass** es sich bei der Verfahrensvariante c) um eine Pulverbeschichtung oder um eine e-lektrostabile Beschichtung in Suspension handelt.

30. Verfahren nach einem der Ansprüche 4 bis 29, **dadurch gekennzeichnet, dass** die in der Verfahrensvariante c) eingesetzten Hüllpolymere mit Hilfe einer Lösungspolymerisation hergestellt worden sind.

31. Verfahren nach einem der Ansprüche 4 bis 30, **dadurch gekennzeichnet, dass** das Hüllpolymer in der Verfahrensvariante c) pro aufgebrachter Schicht in einer Menge von 5 bis 100 Gew.-%, vorzugsweise von 10 bis 80 Gew.-% und besonders bevorzugt in einer Menge von 25 bis 75 Gew.-%, jeweils bezogen auf das Kernpolymer, eingesetzt wurde.

32. Verfahren nach einem der Ansprüche 4 bis 31, **dadurch gekennzeichnet, dass** in der Verfahrensvariante c) ein Hüllpolymer eingesetzt wurde, welches als kationisches Monomer mindestens eine Verbindung der Reihe der Ester-Quats, vorzugsweise ein [2-(Acryloyloxy)-ethyl]trimethylammoniumsalz, [2-(Methacryloyloxy)-ethyl]-trimethylammoniumsalz, oder [2-(Acryloyloxy)-ethyl]diethylmethylammoniumsalz welches als Anion Chlorid, Monomethylsulfat, Monoethylsulfat oder Sulfat ist, oder Mischungen daraus enthält.

33. Verfahren nach einem der Ansprüche 4 bis 32, **dadurch gekennzeichnet, dass** das Hüllpolymer in der Verfahrensvariante c) mindestens eines der Monomere der Reihe 3-Dimethylaminopropylacrylamid, 3-Dimethylaminopropylmethacrylamid, Allylamin, Vinylamin oder Ethylenimin enthält, wobei die Aminofunktion vorzugsweise zwischen 0 und 100 %, besonders bevorzugt zwischen 50 und 100 % neutralisiert ist.

34. Verfahren nach einem der Ansprüche 4 bis 33, **dadurch gekennzeichnet, dass** das verwendete SAP in der Verfahrensvariante c) mindestens zwei Hüllschichten besitzt, wobei die Ladung der aufeinander folgenden Schichten jeweils unterschiedlich von der darunter liegenden Schicht ist.

35. Verfahren nach einem der Ansprüche 4 bis 34, **dadurch gekennzeichnet, dass** in der Verfahrensvariante c) mindestens eine Hüllschicht vernetzt ist.

36. Verfahren nach Anspruch 35, **dadurch gekennzeichnet, dass** das verwendete SAP in der Verfahrensvariante c) mindestens eine Hüllschicht aufweist, die mit Hilfe einer wässrigen Lösung vernetzt worden ist.

37. Verfahren nach einem der Ansprüche 35 oder 36, **dadurch gekennzeichnet, dass** in der Verfahrensvariante c) die mindestens eine Hüllschicht mit Hilfe einer Verbindung ausgewählt aus der Reihe der Diepoxide, vorzugsweise Diethylenglykoldiglycidylether, Polyethylenglykoldiglycidylether, wasserfreie Diisocyanate, Glyoxal, Glyoxylsäure, Formaldehyd, Formaldehydbildner oder deren Mischungen vernetzt worden ist.

38. Verfahren nach einem der Ansprüche 4 bis 37, **dadurch gekennzeichnet, dass** in der Verfahrensvariante d) als hydrolysestabiles Monomer ein permanent nicht-ionisches Monomer eingesetzt wurde, vorzugsweise ausgewählt aus der Reihe der wasserlöslichen Acrylamid-Derivate, vorzugsweise alkylsubstituierte Acrylamide oder aminoalkylsubstituierte Derivate des Acrylamids oder des Methacrylamids und besonders bevorzugt Acrylamid, Methacrylamid, N-Methylacrylamid, N-Methylmethacrylamid, N,N-Dimethylacrylamid, N-Ethylacrylamid, N,N-Diethylacrylamid, N-Cyclohexylacrylamid, N-Benzylacrylamid, N,N-Dimethylaminopropylacrylamid, N,N-Dimethylaminoethylacrylamid, N-tertiär Butylacrylamid, sowie N-Vinylformamid, N-Vinylacetamid, Acrylnitril, Methacrylnitril, oder beliebige Mischungen daraus sowie der Vinyllactame wie N-Vinylpyrrolidon oder N-Vinylcaprolactam und Vinylether wie Methylpolyethylenglykol-(350 bis 3000)-monovinylether, oder solche, die sich von Hydroxybutylvinylether ableiten wie Polyethylenglykol-(500 bis 5000)-vinyloxy-butylether, Polyethylenglykol-block-propylenglykol-(500 bis 5000)-vinyloxy-butylether, oder beliebige Mischungen daraus.

39. Verfahren nach einem der Ansprüche 4 bis 38, **dadurch gekennzeichnet, dass** in der Verfahrensvariante d) als hydrolyselabiles Monomer ein nicht-ionisches Monomer eingesetzt wurde, ausgewählt aus der Reihe der wasserlöslichen oder wasserdispergierbaren Ester der Acrylsäure oder Methacrylsäure, wie Hydroxylethyl(meth)acrylat, Hydroxypropyl(meth)acrylat (als techn. Produkt ein Isomerengemisch), Ester der Acrylsäure und Methacrylsäure, die als Seitenkette Polyethylenglykol, Polypropylenglykol oder Copolymere aus Ethylenglykol und Propylenglykol besitzen, Ethyl(meth)acrylat, Methyl(meth)acrylat und 2-Ethylhexylacrylat.

40. Verfahren nach einem der Ansprüche 4 bis 39, **dadurch gekennzeichnet, dass** es sich bei dem nach der Verfahrensvariante d) herstellbaren SAP um ein nicht-ionisches Monomer mit einem Anteil an ionischer Ladung von maximal 5,0 Mol-% und vorzugsweise 1,5 bis 4,0 Mol-% handelt.

41. Verfahren nach einem der Ansprüche 4 bis 40, **dadurch gekennzeichnet, dass** es sich bei dem in der Verfahrensvariante d) eingesetzten Vernetzer um einen hydrolysestabilen Vernetzer handelt und vorzugsweise um mindestens einen Vertreter ausgewählt aus der Reihe N,N'-Methylenbisacrylamid, N,N'Methylenbismethacrylamid oder Monomere mit mindestens einer Maleinimidgruppe, vorzugsweise Hexamethylenbismaleinimid, Monomere mit mehr als einer Vinylethergruppe, vorzugsweise Ethylenglykoldivinylether, Triethylenglykoldivinylether, Cyclohexandioldivinylether, Allylamino- oder Allylammoniumverbindungen mit mehr als einer Allylgruppe, vorzugsweise Triallylamin oder ein Tetraallylammoniumsalz wie Tetraallylammoniumchlorid, oder Allylether mit mehr als einer Allylgruppe, wie Tetraallyloxyethan und Pentaerythrittriallylether, oder Monomere mit vinylaromatischen Gruppen, vorzugsweise Divinylbenzol und Triallylisocyanurat, oder Diamine, Triamine, Tetramine oder höherwertige Amine, vorzugsweise Ethylendiamin und Diethylentriamin.

42. Verfahren nach einem der Ansprüche 4 bis 41, **dadurch gekennzeichnet, dass** in der Verfahrensvariante d) der hydrolysestabile Vernetzer in Mengen von 0,01 bis 1,0 Mol.-%, vorzugsweise von 0,03 bis 0,7 Mol.-% und besonders bevorzugt von 0,05 bis 0,5 Mol.-% eingesetzt wurde.

43. Verfahren nach einem der Ansprüche 4 bis 42, **dadurch gekennzeichnet, dass** das verwendete SAP mit Hilfe mindestens zweier Verfahrensvarianten a), b), c) oder d) und vorzugsweise unter Anwendung einer Gelpolymerisation und/oder einer inversen Suspensionspolymerisation hergestellt wurde.

44. Verfahren nach Anspruch 43, **dadurch gekennzeichnet, dass** die Verfahrensvarianten a) und b) kombiniert wurden.

45. Verfahren nach einem der Ansprüche 1 bis 44, **dadurch gekennzeichnet, dass** 30 Minuten nach dem Niederbringen des SAP in die unterirdische Formation maximal 70%, vorzugsweise maximal 60% und besonders bevorzugt maximal 50% der maximalen Absorptionskapazität des superabsorbierenden Polymers erreicht sind.

46. Verfahren nach einem der Ansprüche 1 bis 45, **dadurch gekennzeichnet, dass** das SAP eine Teilchengröße von 0,5 bis 1000 µm, bevorzugt von 1 bis 200 µm und besonders bevorzugt von 10 bis 100 µm aufweist.
